# EUROPEAN PATENT APPLICATION

(11) **EP 3 621 023 A1**
(43) Date of publication of application: **11.03.2020**
(21) Application number: 19160127.7
(22) Date of filing: 28.02.2019
(51) Int. Cl.: G06Q 50/26

(54) **THE GENESIS PROJECT**

(30) Priority: 07.09.2018 IN 201811033795
(71) Applicant: Sharma, Anuj, New Delhi 110002 (IN)
(72) Inventor: Sharma, Anuj, New Delhi 110002 (IN)
(74) Representative: Potter Clarkson

(57) **Abstract**

A method and system providing complete global defence mobility, operation and execution of any kind, anywhere, at any place by an authorised user, the system comprising live hologram projections "Digital Assets" of all on field "Physical Assets"; each hologram of a physical asset having infinite data points as required; and the system creating live "Digital Twins" of all available physical assets including humans in real world complete with monitoring, visualisation, communication, operations and execution capabilities incorporating Artificial Intelligence Powered Descriptive, Predictive, Prescriptive and Cognitive (Fully Autonomous) Analytics and operative capabilities for Global Defence World.

## Description

### FIELD OF INVENTION

The Genesis Project is an Augmented Reality-Mixed Reality and Software platform for Battlefield Command and Control, Security-Law Enforcement operations and Defense Management incorporating all types of Land, Sea, Air and Space Forces and its assets with Artificial Intelligence (Ai) Powered Descriptive, Predictive, prescriptive and Cognitive (Fully autonomous) Analytics and operative capabilities for Global Defense World.

### STATEMENT OF INVENTION

The GENESIS PROJECT for the first time in the history of mankind provides:
I. Live Hologram projections "Digital Assets" of all on field "Physical Assets" including humans
II. Data Infused Holograms with Artificial Intelligence (AI) Powered Descriptive, Predictive, prescriptive and Cognitive (Fully autonomous) Analytics and operative capabilities for Global Defense World. Each Hologram of a Physical asset has infinite data points as required.
III. GENESIS provides live holographic visualizations of battlefields, conflicts zones and every surface area of the earth including air, sea and space.
IV. Live Battlefield and other areas Visualizations in holographic visualizations with AI Analytics in real time leads to total mission awareness, mission planning, rehearsal, and execution-operations.
V. GENESIS creates Absolute Situational awareness by providing real-time information on the current situation and execution-operational capabilities from GENESIS itself. Genesis can be accessed anytime anywhere and provides complete mobility for entire operations. No Brick and Mortar facilities are required to operate Genesis.
VI. GENESIS provides complete global defense mobility, operation and execution anytime, anywhere, anyplace and by any user authorized to access Genesis. All Function of GENESIS are "Touch" and "Voice Command "Enabled.
VII. GENESIS will be developed in AR (Augmented Reality-MR (Mixed Reality) Holographic screens and projections
VIII. GENESIS will also be developed in software mode available in computers, tablets, mobile phones and smart screens
IX. GENESIS should be operated on a secured -encrypted environment due to its sensitivity and strategic deployment capabilities.
X. Authority levels of GENESIS access per screen and functions can be decided as per user requirements.
XI. GENESIS Holograms can also be held by hand and moved around.

### SUMMARY OF INVENTION

THE GENESIS PROJECT uses Augmented Reality-Mixed Reality to create live "Digital Twins" referred to as Hologram Projections of all available "Physical Assets including humans in real world complete with monitoring, visualization, communication, operations and execution capabilities incorporating Artificial Intelligence (Ai) Powered Descriptive, Predictive, prescriptive and Cognitive (Fully autonomous) Analytics and operative capabilities for Global Defense World.

Technology Description: The following technologies have been used to create THE GENESIS PROJECT: HoloLens AR-MR Glasses, META 2 AR-MR Glasses, Any AR-MR Glasses, Magic Leap MR Glasses, Unity 3D, Vuforia, Maya 3D, Microsoft.Net Platform, Azure Cloud Platform, HTML 5, CSS 3, JavaScript, Angular, jQuery, IOTtech, AI/Machine Learning, Python.

### OBJECT OF INVENTION

The GENESIS PROJECT for the first time in the history of mankind provides:
I. Live Hologram projections "Digital Assets" of all on field "Physical Assets" including humans
II. Data Infused Holograms with Artificial Intelligence (Ai) Powered Descriptive, Predictive, prescriptive and Cognitive (Fully autonomous) Analytics and operative capabilities for Global Defense World. Each Hologram of a Physical asset has infinite data points as required.
III. GENESIS provides live holographic visualizations of battlefields, conflicts zones and every surface area of the earth including air, sea and space.
IV. Live Battlefield and other areas Visualizations in holographic visualizations with Ai Analytics in real time leads to total mission awareness, mission planning, rehearsal, and execution-operations.
V. GENESIS creates Absolute Situational awareness by providing real-time information on the current situation and execution-operational capabilities from GENESIS itself. Genesis can be accessed anytime anywhere and provides complete mobility for entire operations. No Brick and Mortar facilities are required to operate Genesis.
VI. GENESIS provides complete global defense mobility, operation and execution anytime, anywhere, anyplace and by any user authorized to access Genesis. All Function of GENESIS are "Touch" and "Voice Command "Enabled.
VII. GENESIS will be developed in AR (Augmented Reality-MR (Mixed Reality) Holographic screens and projections
VIII. GENESIS will also be developed in software mode available in computers, tablets, mobile phones and smart screens
IX. GENESIS should be operated on a secured -encrypted environment due to its sensitivity and strategic deployment capabilities.
X. Authority levels of GENESIS access per screen and functions can be decided as per user requirements.
XI. GENESIS Holograms can also be held by hand and moved around.

### SCOPE OF INVENTION

The scope of THE GENESIS PROJECT is to provide a single Global platform for all types of defense, security and law enforcement agencies, institutions powered with Artificial Intelligence operational and analytics and real time monitoring through live "Digital Twins" referred to as Hologram Projections of all available "Physical Assets" including humans.

### STATEMENT REGARDING FEDERALLY SPONSORED RESEARCH OR DEVELOPMENT (IN ANY)

THE GENESIS PROJECT is NOT a government, or third party sponsored research and development.

### A BRIEF DESCRIPTION OF ACCOMPANYING DRAWINGS

The foregoing detailed description of embodiments is better understood when read in conjunction with the appended drawing. For the purpose of illustrating the disclosure, there is shown in the present document example constructions of the disclosure; however, the disclosure is not limited to the specific methods disclosed in the document and the drawings.

The detailed description is described with reference to the accompanying figure. In the figure, the leftmost digit(s) of a reference number identifies the figure in which the reference number first appears. The same numbers are used throughout the drawings to refer like features and components.

Figure 1 to Figure 32 provide a description of the capabilities and functionalities of The GENESIS PROJECT and its applications as follows:
Figure 1: shows the options available to the user for starting the Genesis Project.
Figure 2: depicts the command options available to the user.
Figure 3: refers to army command and joint forces of various nations.
Figure 4: refers to hologramic Augmented Reality - Mixed Reality screen.
Figure 5: refers to the hologramic views of the boundaries of selected countries.
Figure 6A: depicts the macro view of hologram air projection of selected sector of a country.
Figure 6B: depicts the macro view of hologram ground projection of selected sector of a country with user using smart glasses with Augmented Reality - Mixed Reality technology.
Figure 7: shows the availability of the types of assets of every country.
Figure 8A: depicts the example of screen that opens when user clicks on hologram of "Live Digital Asset" of a soldier's hologram.
Figure 8B: is a detailed screen of soldier hologram.
Figure 9: is an illustrative example of how to create a "Digital Twin" of a "Physical Asset" being a soldier as an example in this figure.
Figure 10A: depicts another example of screen that opens when user clicks on hologram of another "Live Digital Asset"
Figure 10B: is a detailed screen of hologram of 10A.
Figure 11: depicts an example of a mechanical part of the assets in the hologram as made in genesis.
Figure 12: states that figure 10.A, Figure 10.B, Figure 11 needs to be made for all assets in GENESIS.
Figure 13: is an example of a "Digital Asset" of a Telecommunication Truck clicked by user from figure 7.
Figure 14: is an example of a "Digital Asset" of a Forward Operating Base or Operating Base.
Figure 15: is an example of "Digital Asset" of an Ammunition Depot.
Figure 16: shows an example of a "Digital Asset" of a Medical Facility or a Hospital.
Figure 17: shows an example of a "Digital Asset" of an Army Canteen.
Figure 18: shows the screen that opens when user clicks on the "DEPARTMENTS" in figure 16. The screen as shown in figure 18 opens in Augmented Reality- Mixed Reality depicting WARD DETAILS.
Figure 19: is an example of a "Digital Asset" of an engineering support building in Army.
Figure 20: represents the "Digital Assets" of INTERNATIONAL BORDER.
Figure 21: is an example of a "Helicopter" / "Airplane".
Figure 22: is an example of a "Drone" / "Unmanned Aerial Vehicle".
Figure 23: depicts a sample of GENESIS AI selection.
Figure 24: is an example of GENISIS AI screen for a single "Digital Asset", being a soldier in this case.
Figure 25: depicts an example of a "Digital Asset" of a hologram of "Rocket" / "Missile".
Figure 26: depicts the 26.1.1 REFERS TO HOLOGRAM OF THE ROBOT in GENESIS.
Figure 27: depicts 27.1.1 REFERS TO HOLOGRAMIC IMAGE OF SWARM ROBOTS
Figure 28: shows AR-MR platform and its applicability on different modes such as Mobile phones, smart phones, tablets and computers in an encrypted secured environment.
Figure 29: depicts a hologram of "Goods Vehicle/Truck" in GENESIS.
Figure 30: depicts the hologram of a live 30.1 HOLOGRAM OF ROTATING EARTH which the user can access in genesis by clicking on button in GENESIS CENTRAL COMMAND.
Figure 31 : shows the screens that open upon clicking the hologram of a " Orbiting Digital Asset" around figure 30.
Figure 32 : depicts the screens for UAV / drones same as figure 22.

### LEGENDS OF DRAWINGS

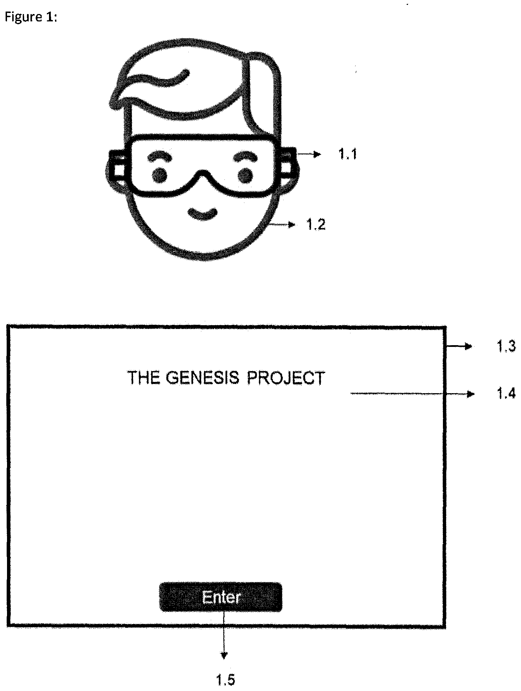

### Legend for Figure 1:

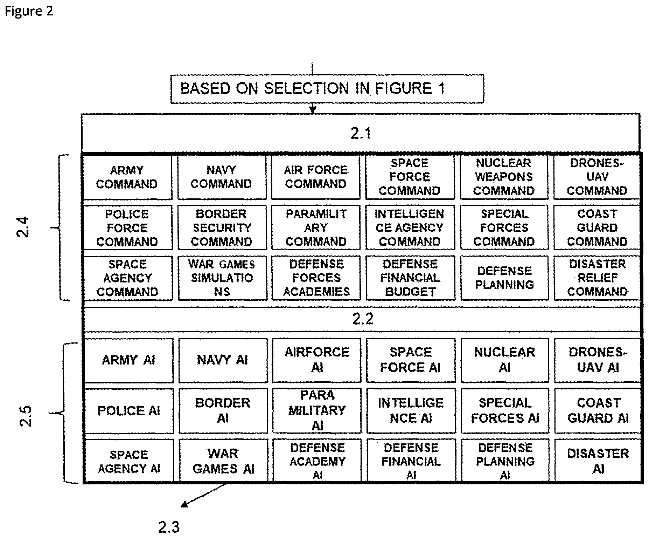

1.1 GLASSES WITH MIXED REALITY- AUGMENTED REALITY
1.2 USER (HUMAN/ALIEN/ROBOT)
1.3 HOLOGRAM IN AR-MR BOX
1.4 HOLOHRAMIC TEXT IN MR-AR
1.5 CLICKABLE BUTTON OR "VOICE COMMAND ACTIVATED". CLICKING TAES YOU TO FIGURE 2

### Legend for Figure 2:

2 REFERS TO FIGURE 2 IN THE DOCUMENT
2.1 REFERS TO GENESIS CENTRAL COMMAND
2.2 REFERS TO GENESIS AI -ARTIFICIAL INTELLIGENCE
2.3 REFERS TO HOLOGRAMIC AR-MR SCREEN BOX
2.4 REFERS TO VARIOUS CLICKABLE BUTTONS IN GENESIS CENTRAL COMMAND
2.5 REFERS TO VARIOUS CLICKABLE BUTTONS IN GENESIS AI-ARTIFICAL COMMAND
UAV: Unmanned Arial Vehicles/Drones
Ai: Artificial Intelligence

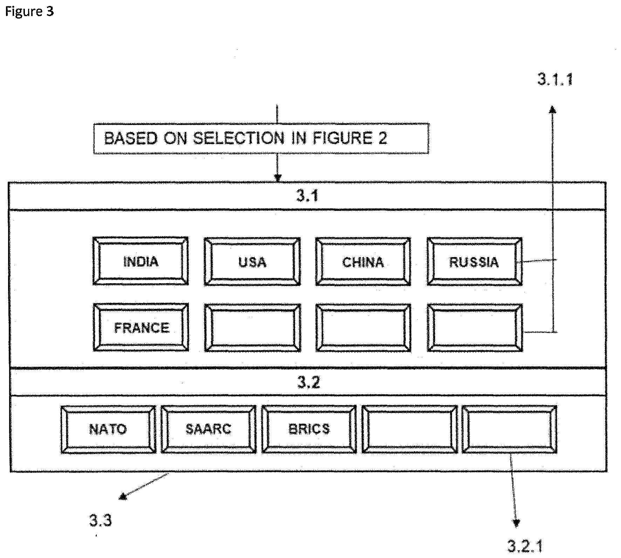

### Legend for Figure 3:

2 REFERS TO FIGURE 2 IN THE DOCUMENT
3.1 REFERS TO ARMY COMMAND OF VARIOUS NATIONS
3.1.1 CLICKABLE BUTTONS FOR COUNTRIES
3.2 REFERS TO JOINT FORCES OF NATIONS
3.2.1 CLICKABLE BUTTONS OF JOINT FORCES OF NATIONS
3.3 REFERS TO HOLOGRAMIC AR-MR SCREEN

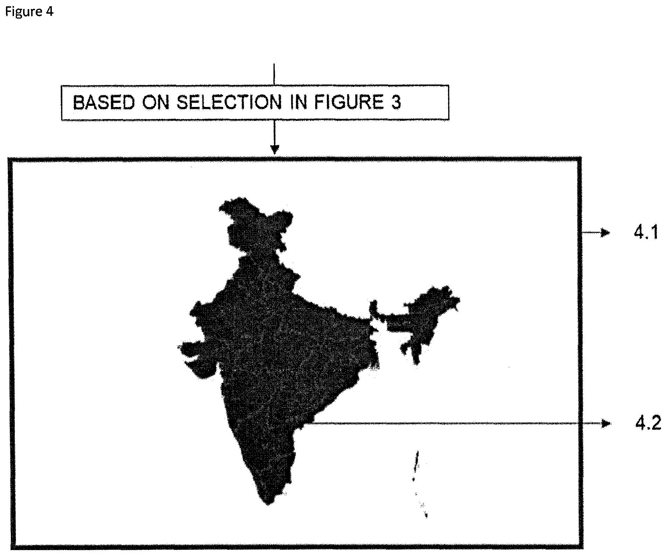

### Legend for Figure 4:

3 REFERS TO FIGURE 3 IN THE DOCUMENT
4.1 REFERS TO HOLOGRAMIC AR-MR SCREEN
4.2 REFERS TO HOLOGRAM MAP

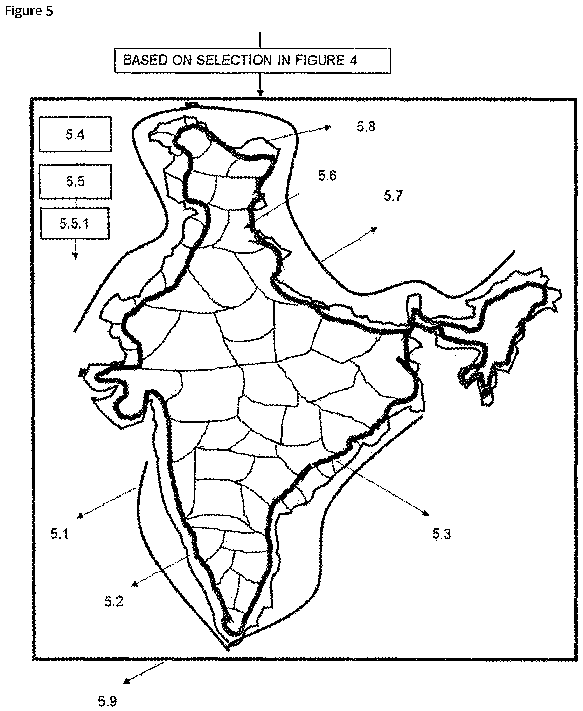

### Legend for Figure 5:

4 REFERS TO FIGURE 4 OF THE DOCUMENT
5.1 EXTERNAL SECTOR CONSISTING OF MARITIME BOUNDARY
5.2 INTERNATIONAL BORDER IN HOLOGRAM
5.3 ALL INTERNAL SECTORS
5.4 HOLOGRAM CLICKABLE BACK BAUTTON
5.5 GENESIS CENTRAL COMMAND BUTTON
5.5.1 TAKES TO FIGURE 2
5.6 HOLOGRAM ALPHABETS AND NUMBER IN AR AND MR
5.7 HOLOGRAM IMAGE OF 100 KM EXTERNAL AREA FROM INTERNATIONAL BORDER
5.8 ALL EXTERNAL SECTORS
5.8 REFERS TO HOLOGRAM MAP OF SELECTED COUNTRY

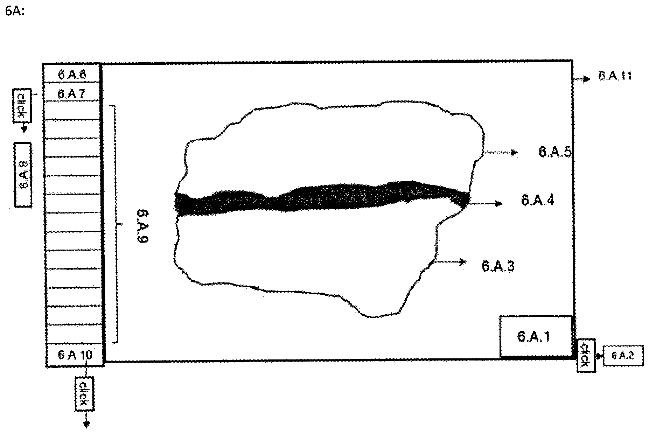

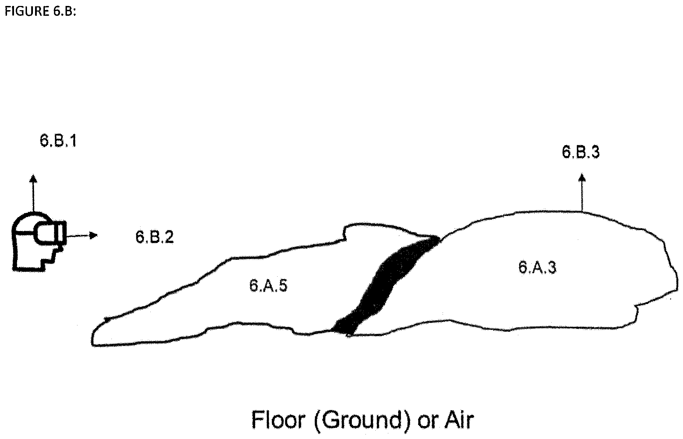

### Legend for Figure 6.A

6.A.1 SATELLITE IMAGE
6.A.2 E1+I1 LIVE SATELLITE IMAGE
6.A.3 INTERNAL SECTOR (I1)
6.A.4 INTERNATIONAL BORDER
6.A.5 EXTERNAL SECTOR (E1)
6.A.6 BACK BUTTON
6.A.7 GENESIS CENTRAL COMMAND BUTTON
6.A.8 TAKES TO FIGURE 2
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND
6.A.10 BUTTON WHICH COMBINS ALL ASSETS
6.A.11 REFERS TO HOLOGRAM BOX

### Legend for Figure 6.B:

6.A.3 INTERNAL SECTOR (I1)
6.A.5 EXTERNAL SECTOR (E1)
6.B.1 USER
6.B.2 SMART GLASSES WITH AR-MR TECHNOLOGY
6.B.3 HOLOGRAM PROJECTION ON GROUND

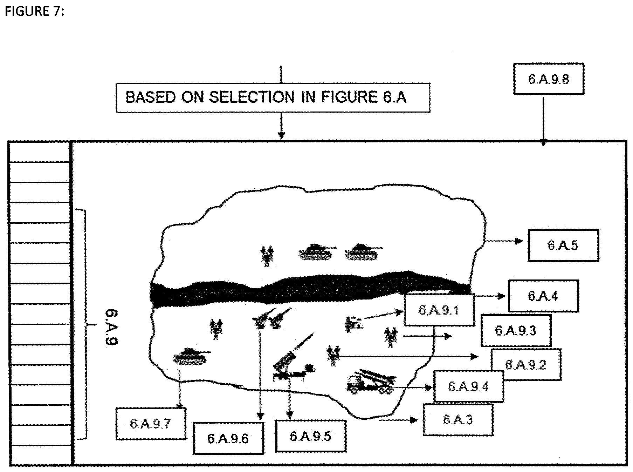

### Legend for Figure 7:

6.A.3 INTERNAL SECTOR (I1)
6.A.4 INTERNATIONAL BORDER (LOC ALSO KNOWN AS LINE OF ACTUAL CONTROL)
6.A.5 EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING EXAMPLES OF ARMY ASSETS SUCH AS:

| | |
|---|---|
| 6.A.9.1 FORWARD OPERATING BASE HOLOGRAM | 6.A.9.6 ARTILERY MACHINE HOLOGRAM |
| 6.A.9.2 AND 6.A.9.3 SOLDIERS HOLOGRAM | 6.A.9.7 TANK HOLOGRAM |
| 6.A.9.4 ROCKET LAUNCHER HOLOGRAM | 6.A.9.8 HOLOGRAM AR-MR SCREEN |
| 6.A.9.5 MISSILE LAUNCHER HOLOGRAM | |

**NOTE: EVERY SINGLE ASSETS HOLOGRAM IS ALSO CLICKABLE. ALL AND EVERY TYPE OF ASSETS OF EVERY COUNTRY AND ALL TYPES OF ITS DEFENSE FORCES, LAW ENFORESEMENT FORCES AND ANY OTHER FORCES IS AVAILABE IN GENESIS AS A DIGITAL ASSET. EACH AND ALL DIGITAL ASSETS ARE REPRESENTED WITH A SPECIFIC HOLOGRAM OF THAT ASSET IN GENESIS.**
SOME OTHER EXAMPLES OF ASSETS OF ARMY IN GENESIS ARE (**but not limited to**):

| | |
|---|---|
| 1 SOLDIERS (BATTLION DIVISION WISE) | 15 DRONES -UAVS |
| 2 MISSILES (DIFFERENT TYPES) | 16 SWAMP BOATS |
| 3 TANKS (ALL TYPES) | 17 HELICOPTERS |
| 4 ROCKET LAUNCHER (TYPES) | 18 AIRCRAFTS |
| 5 FORWARD OPERATING BASES | 19 TANK DESTROYERS |
| 6 AMMUNITION (ALL TYPES) | 20 ARMOURED AMBULANCES |
| 7 ARTILLERY GUNS (ALL TYPES) | 21 MEDICS |
| 8 ARM JEEPS, CARS, TRUCKS AND BIKES | 22 MEDICAL FACILITES AND SUPPLIES |
| 9 MOBILE MISSILE UNITS | 23 AIR DEFENSE MOBILE UNITS |
| 10 ENGINEERING SUPPORT VEHICLES | 24 AIR DEFENSE MISSILES |
| 11 MINE LAYING VEHICLES | 25 COMBAT VEHICLES (ARMOURED CARRIERS) |
| 12 MINE CLEARING VEHICLES | 26 ROBOT SOLDIERS |
| 13 HOVERCRAFTS | 27 ORDINANCES |
| 14 UNMANNED ROBOTS | 28 FOOD |

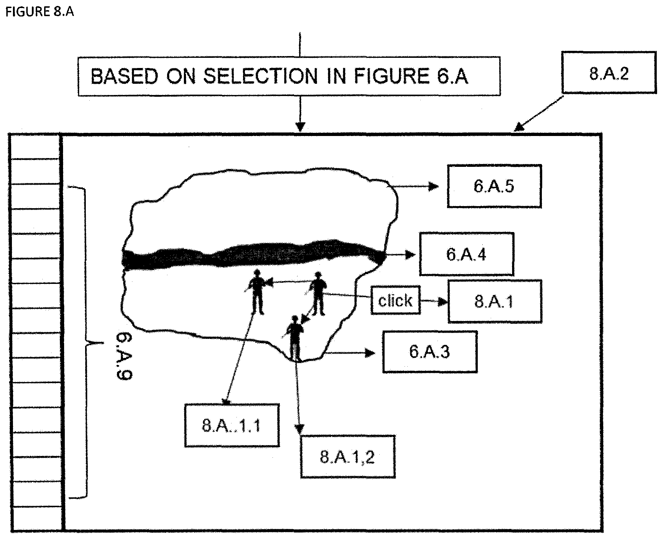

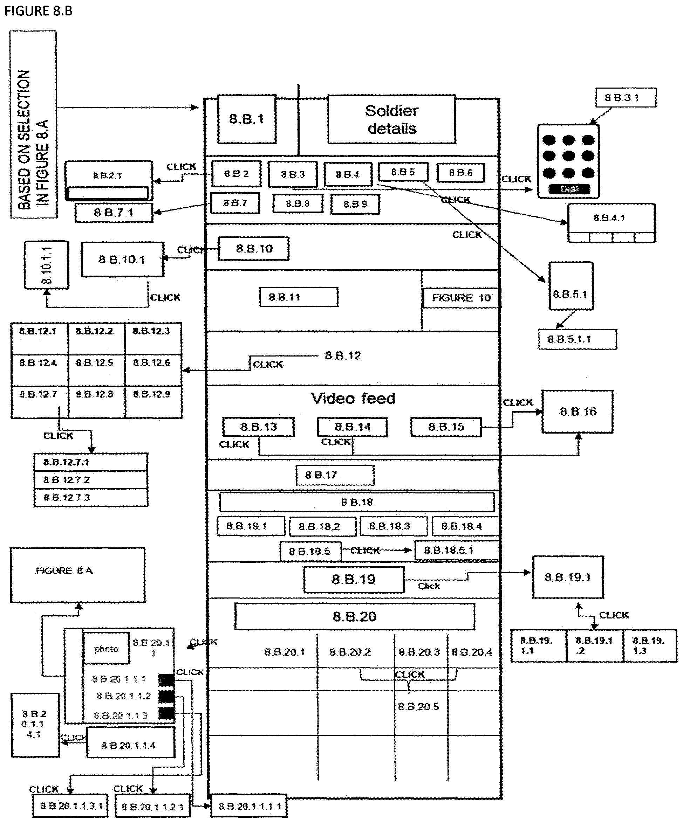

### Legend for Figure 8.A

### 6.A REFERS TO FIGURE 6.A IN THE DOCUMENT

6.A.3 REFERS TO INTERNAL SECTOR (I1)
6.A.4 REFERS TO INTERNATIONAL BORDERS
6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
8.A.1 HOLOGRAM OF SOLDIERS
8.A.1.1 MEDIC TO SHOW MEDICAL SIGN ON ITS HOLOGRAM
8.A.1.2 SPECIAL FORCES SOLDIERS TO SHOW SKULL SIGN ON ITS HOLOGRAM
8.A.2 HOLOGRAM BOX SCREEN

### Legend for Figure 8.B:

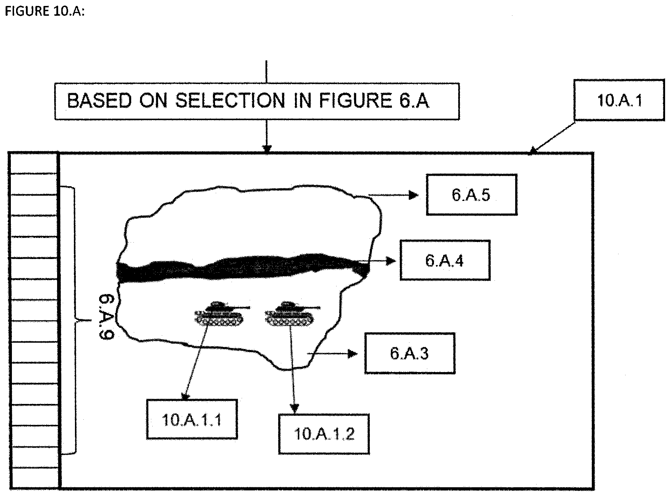

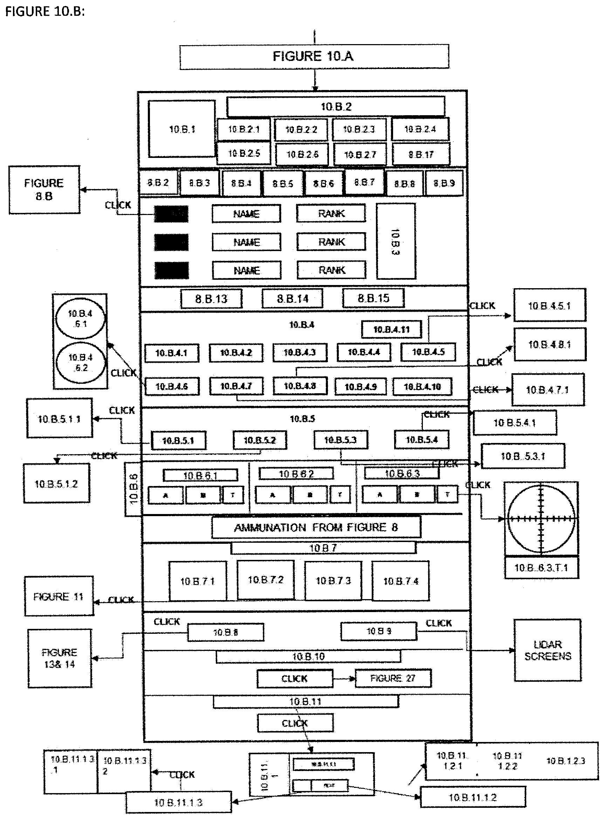

8.A REFERS TO FIGURE 8.A IN THE DOCUMENT
8.B.1 REFERS TO ACTUAL PHOTO OF THE SOLDIER
8.B.2 REFERS TO WHATSAPP/TEXT MESSAGE
8.B.2.1 REFERS TO TEXT SCREEN
8.B.3 PHONE
8.B.3.1 PHONE DIALPAD
8.B.4 SKYPE
8.B.4.1 SKYPE VIDEO FEED
8.B.5 TRANSLATION
8.B.5.1 DIFFERENT LANGUAGE OPTIONS
8.B.5.1.1 AI CONVERTS ALL FIELDS TO SELECTED LANGUAGE IN GENESIS SCREENS
8.B.6 EMAIL
8.B.7 GOOGLE ICON
8.B.7.1 GOOGLE SEARCH
8.B.8 SPEAKER
8.B.9 MUTE
8.B.10 RECORDS
8.B.10.1 DETTAILS OF SERVICE RECORDS
8.B.10.1.1 SCANS OF ALL SERVICE RECORDS OPEN
8.B.11 KEY SPECIFICATION OF SOLDIERS
8.B.12 VITALS OF SOLDIER
8.B.12.1 HEART BEAT
8.B.12.2 BODY TEMPERATURE
8.B.12.3 BLOOD PRESSURE
8.B.12.4 BODY POSTURE
8.B.12.5 FATIGUE RATE
8.B.12.6 DISTANCE WALKED
8.B.12.7 BODY OXYGEN
8.B.12.8 SWEAT/BODY WATER
8.B.12.9 STRESS LEVEL
8.B.12.9.1 HOURLY HEART RATE
8.B.12.9.2 WEEKLY HEART RATE
8.B.12.9.3 MONTHLY HEART RATE
8.B.13 NORMAL CAMERA
8.B.14 NIGHT VISION
8.B.15 THERMAL VISION
8.B.16 AI BASED VIDEO FEED. AI CAN DETECT FACE+ARM+ AMMUNATION
8.B.17 GPS COORDINATES
8.B.18 RANKING OFFICER DETAILS
8.B.18.1 NAME AND PHOTO
8.B.18.2 CALL
8.B.18.3 SKYPE
8.B.18.4 WHATSAPP
8.B.18.5 HOLOGRAM OF RANKING SOLDIER
8.B.18.5.1 SHOWS SOLDIER AS RED AND GREEN BASED ON E1/I1
8.B.19 DUTY ROSTER
8.B.19.1 DAILY/MONTHL/YEARWISE DUTY SCHEDULE/ROSTER
8.B.19.1.1 ATTENDANCE RECORDS
8.B.19.1.2 LEAVE RECORDS
8.B.19.1.3 DIGITAL SCANS OF ALL RECORDS
8.B.20 AMMUNITION OF SOLDIERS
8.B.20.1 DETAILS OF ARM
8.B.20.1.1 DETAILS
8.B.20.1.1.1 SERIAL NUMBER
8.B.20.1.1.1.1 SCOPE VIDEO FEED
8.B.20.1.1.2 MANUFACTURER
8.B.20.1.1.2.1 GUN TEMPERATURE
8.B.20.1.1.3 SPECIFICATIONS
8.B.20.1.1.3.1 GUN LOCATOR GPS+MAP
8.B.20.1.1.4 SERVICE HISTORY
8.B.20.1.14.1 DIGITAL SERVICE MAINTAINCE RECRODS
8.B.20.2 BULLETS ISSUED
8.B.20.3 USED
8.B.20.4 BALANCE
8.B.20.5 AMMUNITION STOCK
10 REFERS TO FIGURE 10 IN THE DOCUMENT

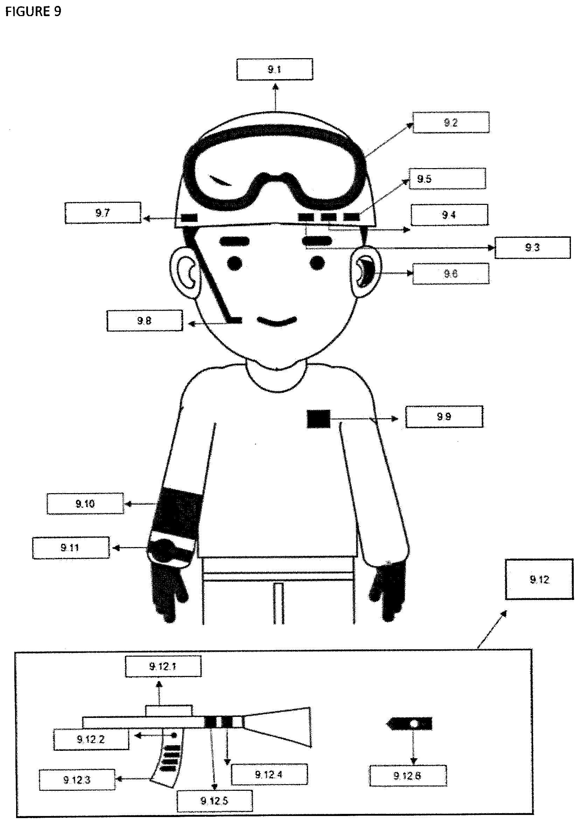

### Legend for Figure 9

9.1 BULLET PROOF HELMER
9.2 HELMET MOUNTED SMART GLASS CONNECTED TO GENESIS PROJECT
9.3 NIGHT VISION CAMERA
9.4 THERMAL VISION CAMERA
9.5 NORMAL VIDEO CAMERA
9.6 WIRELESS EAR BUDS
9.7 GPS LOCATOR
9.8 MIKE TO SPEAK
9.9 BODY PATCH CONNECTED TO 8.B.12 VITALS OF SOLDIER
9.10 PHONE + TEXT DIAL PAD
9.11 SMART WATCH
9.12 DIGITAL TWIN OF A RIFLE
9.12.1 SCOPE SENSOR FOR VIDEO FEED
9.12.2 BULLET
9.12.3 BULLET MAGAZINE SENSOR
9.12.4 GPS LOCATOR
9.12.5 GUN TEMPERATURE SENSOR
9.12.6 BULLET WITH BULLET SENSOR

### Legend for Figure 10.A:

6.A REFERS TO FIGURE 6.A IN THE DOCUMENT
6.A.3 REFERS TO INTERNAL SECTOR (I1)
6.A.4 REFERS TO INTERNATIONAL BORDERS
6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
10.A.1 HOLOGRAM BOX
10.A.1.1 HOLOGRAM OF TANK ONE
10.A.1.2 HOLOGRAM OF TANK TWO

### Legend for Figure 10.B

| | |
|---|---|
| 10.A REFERS TO FIGURE 10.A IN THE DOCUMENT | 8B REFERS TO SCREEN 8B IN THE DOCUMENT |
| 10.B.1 REFERS TO ACTUAL PHOTO OF THE TANK | 8.B.13 NORMAL CAMERA |
| 10.B.2 DETAILS OF THE TANK | 8.B.14 NIGHT VISION |
| 10.B.2.1 BASE | 8.B.15 THERMAL VISION |
| 10.B.2.2 DIVISIONS | 10.B.4 TANK SENSOR FEEDS |
| 10.B.2.3 MAKE | 10.B.4.1 DISTANCE |
| 10.B.2.4 RANGE | 10.B.4.2 ALTITUDE |
| 10.B.2.5 TYPE | 10.B.4.3 TANK SENSORS |
| 10.B.2.6 ARTILLERY BARREL | 10.B.4.4 WIND |
| 10.B.2.7 YEAR OF PRODUCTION | 10.B.4.5 TEMPERATURE |
| 8.B.17 GPS COORDINATES | 10.B.4.5.1 TEMPERATURE SCREENS |
| 8.B.2 REFERS TO WHATSAPP/TEXT MESSAGE | 10.B.4.6 FUEL |
| 8.B.3 PHONE | 10.B.4.6.1 GAUGE FOR CURRENT FUEL |
| 8.B.4 SKYPE | 10.B.4.6.2 RATE OF FUEL CONSUMPTION |
| 8.B.5 TRANSLATION | 10.B.4.7 SPEED |
| 8.B.6 EMAIL | 10.B.4.7.1 SPEED SCREENS |
| 8.B.7 GOOGLE ICON | 10.B.4.8 HUMIDITY |
| 8.B.8 SPEAKER | 10.B.4.8.1 HUMIDITY SCREENS |
| 8.B.9 MUTE | 10.B.4.9 AIR |
| 10.B.3 TANK CREW | 10.B.4.10 WATER |
| 10.B.4.11 POWER | |
| 10.B.5 MANUALS | |
| 10.B.5.1 OPERATIONS MANUAL | |
| 10.B.5.1.1 DIGITAL SCANS OF MANUAL FOR TANK | |
| SYSTEMS | |
| | |
| 10.B.5.2 MAINTAINENCE MANUAL | 10.B.7.1 ENGINE |
| 10.B.5.2.1 DIGITAL BLUE PRINT OF TANK | 10.B.7.2 BARREL |
| 10.B.5.3 SERVICE/MAITAINENCE RECORDS | 10.B.7.3 WHEEL |
| 10.B.5.3.1 SCREEN FOR RECORDS | 10.B.7.4 OTHER |
| 10.B.5.4 EMERGENCY MANUAL | 11 REFERS TO FIGURE 11 IN THE DOCUMENT |
| 10.B.5.4.1 SCREEN FOR MANUAL. | 10.B.8 RADAR FEED |
| 10.B.6 TANK GUN DETAILS | 13& 14 REFER TO FIGURE 13& 14 IN THE DOCUMENT |
| 10.B.6.1 TANK GUN 1 | 10.B.9 LIDAR FEED |
| • A LOAD | |
| • B FIRE | 10.B.10 SELF DESTRUCT BUTTON |
| • T TARGET | 27 REFERS TO FIGURE 27 |
| 10.B.6.2 TANK GUN 2 | 10.B.11 AUTONOMOUS DRIVE |
| • A LOAD | 10.B.11.1 VIDEO FEED |
| • B FIRE | |
| • T TARGET | 10.B.11.1.1 START BUTTON |
| 10.B.6.3 TANK GUN 3 | 10.B.11.1.2 OTHER SCREENS |
| • A LOAD | 10.B.11.1.2.1 CONTROL SCREEN |
| • B FIRE | |
| • T TARGET | 10.B.11.1.2.2 DESTINATION INPUT |
| 10.B.6.3.T.1 LOAD TARGET SCREEN | 10.B.11.1.2.3 MAP LOCATOR |
| 8 REFERS TO AMMUNATION SECTION OF FIGURE 8 | 10.B.11.1.3 ARRIVAL |
| 10.B.7 MECHANICAL COMPONENTS | 10.B.11.1.3.1 CURRENT LOCATION |
| | 10.B.11.1.3.2 ESTIMATE TIME OF TRAVEL & ARRIVAL |

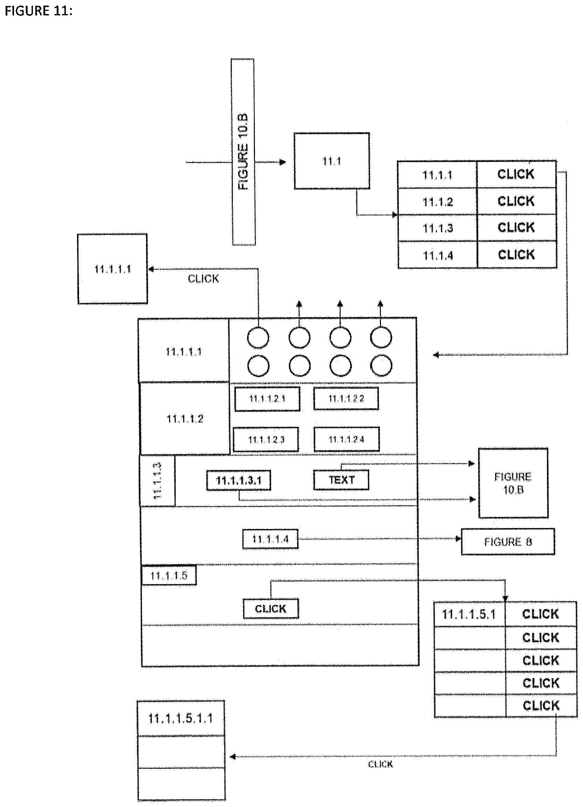

### Legend for Figure 11:

10.B REFERS TO FIGURE 10.B IN THE DOCUMENT
11.1 REFERS TO 3D HOLOGRAMIC IMAGE OF ENGINE (EACH PART CAN BE CLICKED)
11.1.1 ENGINE PISTON
11.1.1.1 STATUS OF SENSORS*
11.1.1.1.1 SCREENS OF SENSORS
11.1.1.2 DETAILS OF ENGINE PARTS
11.1.1.2.1 MAKE
11.1.1.2.2 YEAR
11.1.1.2.3 MANUFACTURER
11.1.1.2.4 SERIAL NUMBER
11.1.1.3 SERVICE/MANUFACTURING DETAILS
11.1.1.3.1 MANUALS (10B REFERS TO SECTION 10B^{#,#}REFERS TO 10.B.5)
11.1.1.4 COMMUNICATION ENGINE MANUFACTURER (8 REFERS TO FIGURE 8, * REFERS TO 10.B.4)
11.1.1.5 AI BASED ANALYTICS OF ENGINE PART PERFORMANCE
11.1.1.5.1 SCREEN FOR PARAMETERS TO BE MEASURED FOR ENGINE PARTS
11.1.1.5.1.1 GRAPHS/VISUAL/DIAGRAMS OF AI ANALYTICS
11.1.2 ENGINE CHAMBER
11.1.3 ALL ENGINE PARTS/SECTIONS
11.1.4 OTHER PARTS

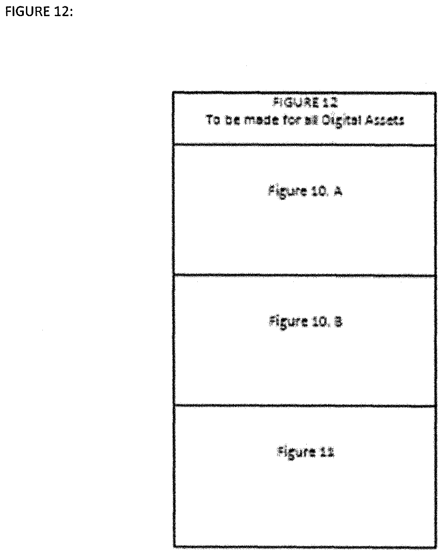

### Legend for Figure 12

Figure 12 states that figure 10.A, Figure 10.B, Figure 11 need to be made for all assets in GENESIS.

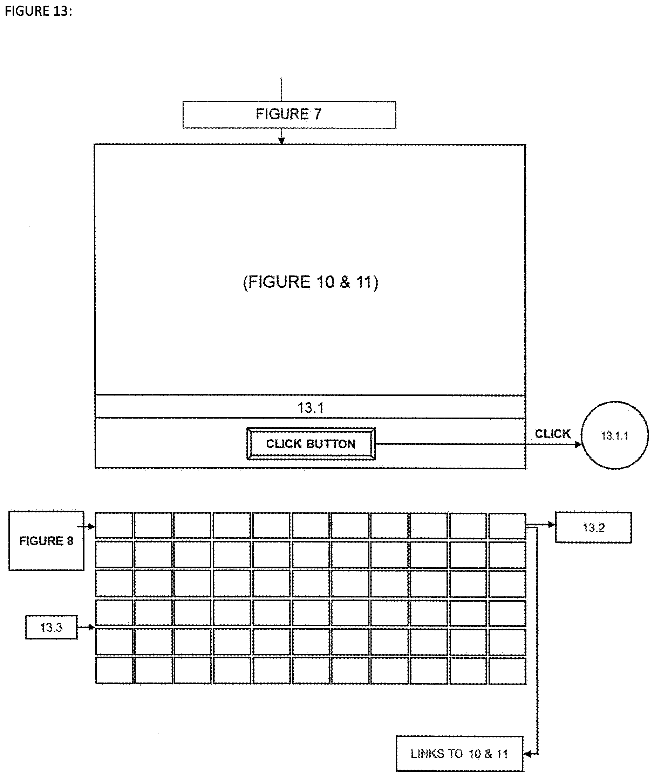

### Legend for Figure 13

7 REFERS TO FIGURE 7 IN THE DOCUMENT
8 REFERS TO FIGURE 8 (8.A and 8.B) IN THE DOCUMENT
10 REFERS TO FIGURE 10 (10.A and 10.B) IN THE DOCUMENT
11 REFERS TO FIGURE 11 IN THE DOCUMENT
13.1 RADAR FEED
13.1.1 RADAR SCREEN OPENS UP
13.2 CLICKABLE BUTTON FOR ASSETS BEING TRACKED BY SELECTED TRUCK
13.3 ALL LINKED ASSETS ARE SHOWN THROUGH THE BUTTON

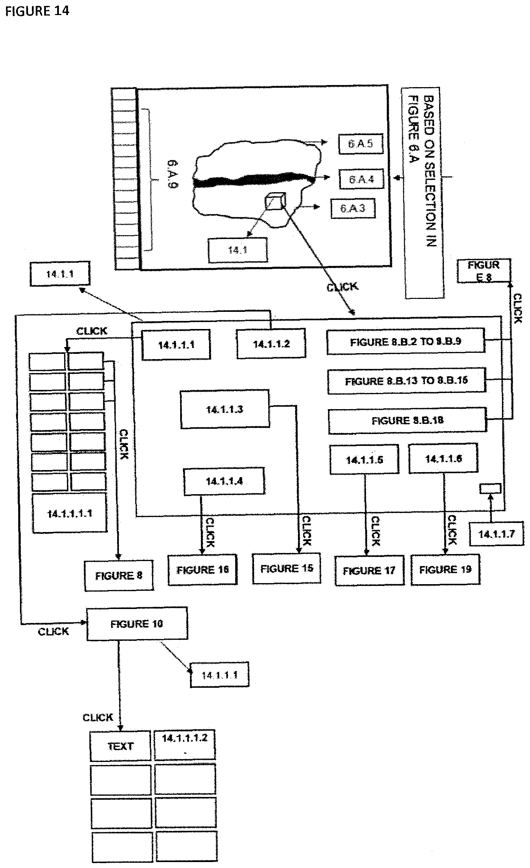

### Legend for Figure 14:

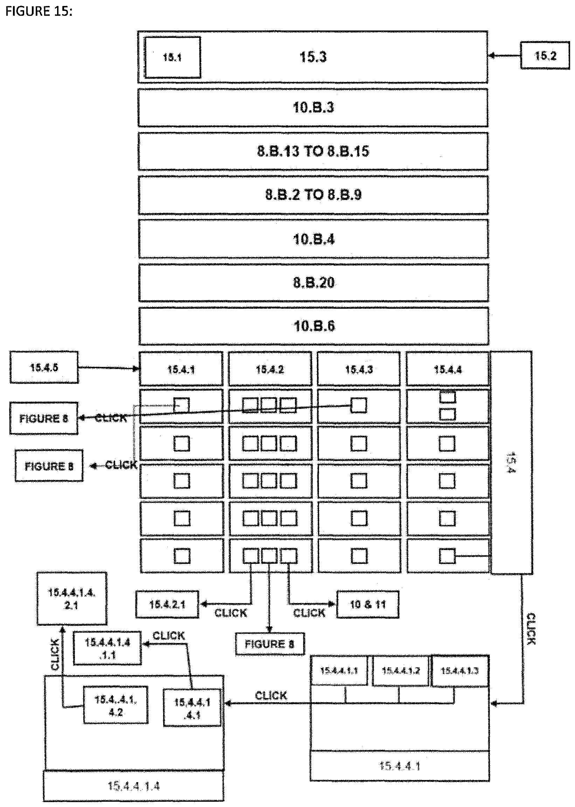

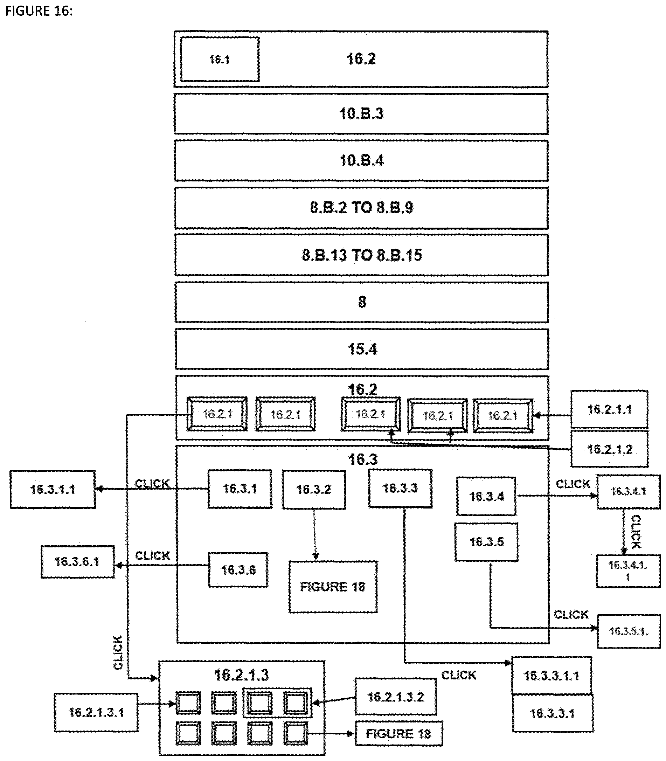

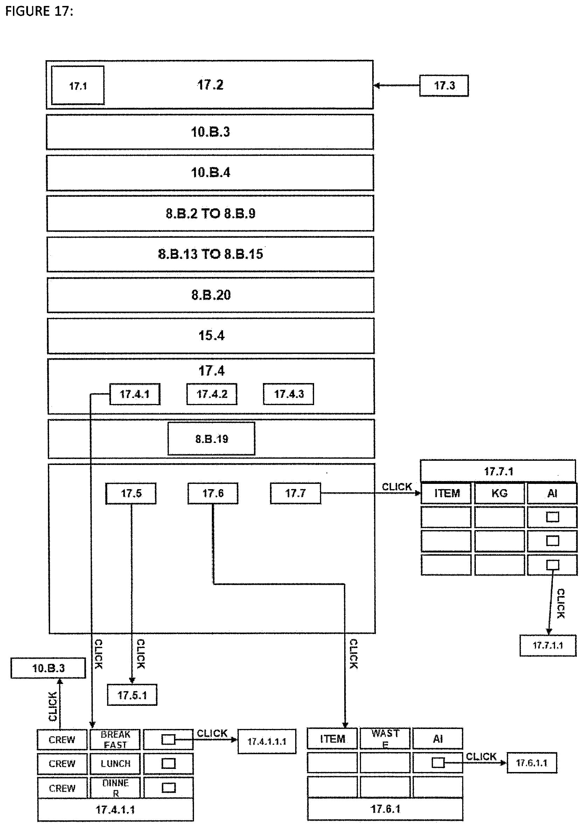

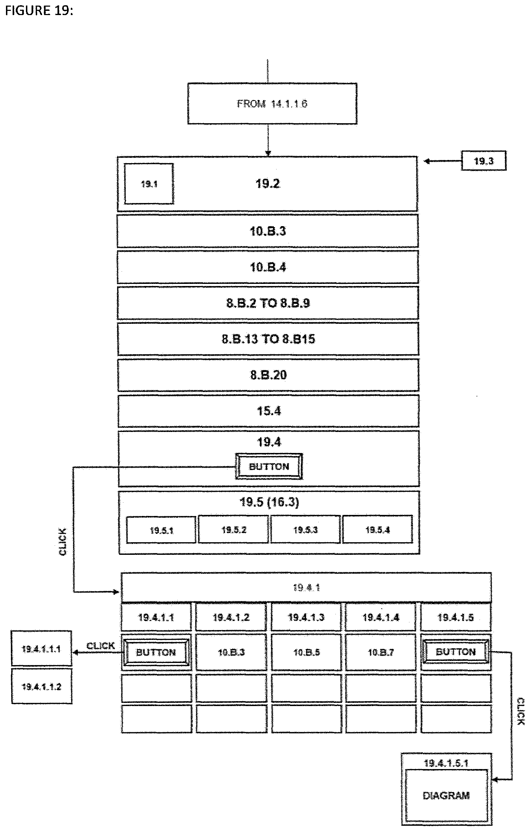

6.A REFERS TO FIGURE 6.A IN THE DOCUMENT
6.A.3 REFERS TO INTERNAL SECTOR (I1)
6.A.4 REFERS TO INTERNATIONAL BORDERS
6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
8 REFERS TO FIGURE 8
10 REFERS TO FIGURE 10
14.1 REFERS TO HOLOGRAM OF OPERATING BASE
14.1.1 REFERS TO HOLOGRAM BOX
14.1.1.1 SOLDIERS
14.1.1.1.1 LIST OF ALL SOLDIERS IN THE CAMP
14.1.1.2 SENSORS
10 REFERS TO SENSORS MENTIONED IN 10.B.4
14.1.1.2.1 AI ANALYTICS FOR ALL THE SENSOR GENERATED DATA
14.1.1.3 AMMUNATION DEPOT
15 REFERS TO FIGURE 15 IN THE DOCUMENT
14.1.1.4 MEDICAL FACILITIES IN THE CAMP
16 REFERS TO FIGURE 16 IN THE DOCUMENT
14.1.1.5 CANTEEN FACILITY IN THE CAMP
17 REFERS TO FIGURE 17 IN THE DOCUMENT
14.1.1.6 ENGINEERING SUPPORT FACILITY
19 REFERS TO FIGURE 19 IN THE DOCUMENT
14.1.1.7 GPS COORDINATES OF THE CAMP
8.B.2 TO 8.B.9 REFERS TO COMMUNICATION SECTION IN FIGURE 8
8.B.13 TO 8.B.15 REFERS TO VIDEO FEED SECTION IN FIGURE 8
8.B.18 REFERS RANKING OFFICER DETAILS IN FIGURE 8

### Legend for Figure 15:

| | |
|---|---|
| 15.1 AMMUNATION FACILITY PHOTO | 15.4.3 INCHARGE |
| 15.2 HOLOGRAM OF BOX | 8 REFERS TO FIGURE 8 IN DOCUMENT |
| 15.3 DETAILS OF GPS COORDINATES | 15.4.4 DELIVERY SCHEDULE |
| 10.B.3 REFERS TO CREW DETAILS UNDER FIGURE 10 | 15.4.4.1 DELIVERY DETAILS |
| 8.B.13 TO 8.B.15 REFERS TO VIDEO FEED UNDER FIGURRE 8 | 15.4.4.1.1 DAY, |
| | 15.4.4.1.2 MONTH |
| 8.B.2 TO 8.B.9 REFERS TO COMMUNICATION SECTION FROM FIGURE 8 | 15.4.4.1.3 YEAR |
| | 15.4.4.1.4 SCREEN FOR DETAIL OF AMMUNATION |
| 10.B.4 REFERS TO SENSORS IN SECTION 10 | 15.4.4.1.4.1 BUTTON TO CHECK RECORDS |
| 8.B.20 REFERS TO AMMUNATION OF SOLDIERS | 15.4.4.1.4.1.1 DIGITAL RECORDS/SCANS FOR EACH DELIVERY |
| 10.B.6 REFERS TO TANK GUN DETAILS | |
| 15.4 ISSUING AND DELIVERY SCHEDULE OF AMMUNATION | 15.4.4.1.4.2 BUTTON FOR AI BASED ANALYTICS |
| | 15.4.4.1.4.2.1 AI BASED ANALYTICS FOR EACH PARAMETER |
| 15.4.1 TYPE OF AMMUNATION | |
| 8 REFERS TO FIGURE 8 IN DOCUMENT | 15.4.5 OPTION TO ADD ADDITIONAL FIELD ON SCREENS |
| 15.4.2 ISSUED TO | |
| 15.4.2.1 BALANCE AMMUNATION LEFT IN STOCK AT DEPOT | |
| 8 REFERS TO FIGURE 8 IN THE DOCUMENT (SPECIFICALLY TO 8.B.20) | |
| 10& 11 REFERS TO FIGURE 10& 11 IN THE DOCUMENT | |

### Legend for Figure 16

| | |
|---|---|
| 16.1 REFERS TO PHOTO OF FACILITY | 16.3.1.1 CLAIMS ERP DATA |
| 16.2 REFERS TO DETAILS OF GPS COORDINATES | 16.3.2 PATIENT FILES |
| 10.B.3 REFERS TO TANK CREW SECTION OF FIGURE 10B IN THE DOCUMENT | 16.3.2.1 LINKS OT MEDICAL RECORD IN FIGURE 18 |
| 10.B.4 REFERS TO SENSORS SECTION OF FIGURE 10B IN THE DOCUMENT | 16.3.3 FINANCIAL RECORDS |
| 8.B.2 TO 8.B.9 REFERS TO COMMUNICATION | 16.3.3.1 FINANCIAL ERP |
| SECTION OF FIGURE 8B IN THE DOCUMENT | 16.3.3.1.1 DIGITAL SCANS OF ALL FINANCIAL RECORDS |
| 8.B.13 TO 8.B.15 REFERS TO VIDEO FEED SECTION OF FIGURE 8B IN THE DOCUMENT | 16.3.4 DEPARTMENT RECORD |
| 8 REFERS TO FIGURE 8B IN DOCUMENT | 16.3.4.1 WARD REPORTS |
| 15.4 REFERS TO ISSUING AND DELIVERY | 16.3.4.1.1 DIGITAL SCANS |
| SCHEDULE OF AMMUNITION (BUT MODELLED FOR HOSPITAL ITEMS) | 16.3.5 PROCUREMENT RECORDS |
| 16.2 HOSPITAL OCCUPANCY | 16.3.5.1 PROCUREMENT ERP |
| 16.2.1 CLICKABLE BUTTONS | 16.3.6 HOSPITAL BLUEPRINT |
| | 16 3.6.1 DIGITAL DRAWINGS |
| 16.2.1.1 & 16.2.1.2 REFERS DEPARTMENTS | |
| 16.2.1.3 DEPARTMENTS | |
| 16.2.1.3.1 CLICKABLE BUTTON | |
| 16.2.1.3.2 WARDS OF THAT DEPARTMENT | |
| 18 REFERS TO FIGURE 18 OF THE DOCUMENT | |
| 16.3 HOSPITAL RECORDS | |
| 16.3.1 CLAIMS | |

### FIGURE 17:

17.1 ACTUAL PHOTO OF THE CANTEEN
17.2 GPS COORDINATES OF THE CANTEEN
17.3 HOLOGRAM IMAGE BOX
10.B.3 REFERS TO TANK CREW SECTION OF FIGURE 10B IN THE DOCUMENT (MODELLED FOR CANTEEN)
10.B.4 REFERS TO SENSORS SECTION OF FIGURE 10B IN THE DOCUMENT
8.B.2 TO 8.B.9 REFERS TO COMMUNICATION SECTION OF FIGURE 8B IN THE DOCUMENT
8.B.13 TO 8.B.15 REFERS TO VIDEO FEED SECTION OF FIGURE 8B IN THE DOCUMENT
8.B.20 REFERS TO FIGURE AMMUNITION SECTION IN FIGURE 8B IN THE DOCUMENT
15.4 REFERS TO ISSUING AND DELIVERY SCHEDULE OF AMMINATION (MODELLED FOR CANTEEN)
17.4 CANTEEN MENU
17.4.1 DAILY MENU
17.4.1.1 MENU DETAILS AND CREW DETAILS
10 REFERS TO FIGURE 10.B.3 IN THE DOCUMENT
17.4.1.1.1 GIVES AI ANALYTICS ON MENU
17.4.2 WEEKLY MENU
17.4.3 MONTHLY MENU
8.B.19 REFERS TO DUTY ROSTER FROM FIGURE 8B IN THE DOCUMENT
17.5 CANTEEN BLUEPRINT
17.5.1 SEATING AREA PLAN OF THE CANTEEN
17.6 FOOD WASTAGE DETAILS
17.6.1 GIVES DETAILED REPORT ON WASTAGE
17.6.1.1 AI ANALYTICS ON WASTAGE
17.7 FOOD CONSUMPTION REPORT
17.7.1 DETAILED REPORT ON FOOD CONSUMPTION
17.7.1.1 AI ANALYTICS BASED REPORT ON FOOD CONSUMPTION

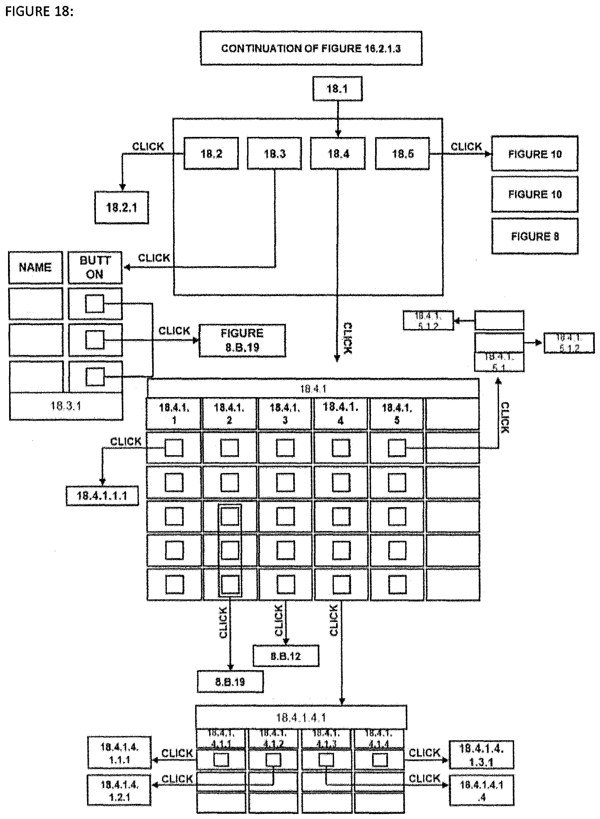

### Legend for Figure 18

| | |
|---|---|
| 16.2.1.3 REFERS TO DEPARTMENTS UNDER HOSPITAL OCCUPANCY | 18.4.1.4.1 MEDICAL RECORDS TABEL |
| 18.1 WARD DETAILS | 18.4.1.4.1.1 ILLNESS DETAILS |
| | 18.4.1.4.1.1.1 SCAN AND RECORD OF ILLNESS |
| 18.2 WARD BLUE PRINT | 18.4.1.4.1.2 RECORDS |
| 18.2.1 DIGITAL LAYOUT OF THE WARD | 18.4.1.4.1.1.2.1 SCANS OF ALL RECORDS |
| 18.3 WARD ROSTER | 18.4.1.4.1.3 TREATMENT |
| 18.3.1 DETAILS OF PEOPLE ON DUTY | 18.4.1.4.1.4 SCAN OF ALL TREATMENTS |
| 8.3.19 REFERS TO DUTY ROSTER IN FIGURE 8B (MODELLED FOR HOSPITAL) | 18.4.1.4.1.4 ANALYTICS |
| 18.4 WARD OCCUPANCY | 18.4.14.1.4.1 AI BASED PRESCRIPTIVE, DESCRITPTIVE AND REDICTIVE ANALYTICS |
| 18.4.1 PATIENT DETAILS | 18.4.1.5 FAMILY RECORDS |
| 18.4.1.1 PATIENT NAME | 18.4.1.5.1 MEDICAL RECODS OF EACH MEMBER |
| 18.4.1.1.1 FIGURE OPENS FOR EACH PATIENT | 18.4.1.5.1.1 SCAN OF MEDICAL RECORDS OF MEMBER 1 |
| 18.4.1.2 ATTENDING MEDICAL STAFF | |
| 8.B.19 REFERS TO DUTY ROSTER IN FIGURE 8B (MODELLED FRO HOSPITAL) | 18.4.1.5.1.2 SCAN OF MEDICAL RECORDS OF MEMBER 2 |
| 18.4.1.3 VITAL DETAILS | |
| 8.B.12 VITAL DETAILS TAKEN FROM 8B | |
| 18.4.1.4 MEDICAL RECORD | |

### Legend for Figure 19:

| | |
|---|---|
| 14.1.1.6 REFRS TO ENGINEERING SUPPORT FACILITY IN FIGURE 14 | 10.B.3 REFERS TO TANK CREW SECTION 10B OF THIS DOCUMENT |
| 19.1 ACTUAL PHOTOS OF LOCATION | MODELLED FOR THIS SECTION |
| 19.2 DETAILS OF GPS COORDINATES | 19.4.1.3 MANUALS |
| 19.3 HOLOGRAMIC IMAGE OF THE BOX | 10.B.5 REFERS TO MANUALS SECTION OF FIGURE 10B OF THIS DOCUMENT |
| 10.B.3 REFERS TO TANK CREW SECTION OF FIGURE 10B IN THE DOCUMENT (MODELLED FOR ENGINEERING SUPPORT BUILDING) | 19.4.1.4 MECHANICAL COMPONENTS |
| 10.B.4 REFERS TO SENSORS SECTION OF FIGURE | 10.B.7 REFERS TO SECTION MANUAL SECTION OF FIGURE 10B OF THIS DOCUMENT (MODELLED |
| 10B IN THE DOCUMENT | FOR ENGINEERING) |
| 8.B.2 TO 8.B.9 REFERS TO COMMUNICATION SECTION OF FIGURE 8B IN THE DOCUMENT | 19.4.1.5 CURRENT STATUS |
| 8.B.13 TO 8.B.15 REFERS TO VIDEO FEED SECTION OF FIGURE 8B IN THE DOCUMENT | 19.4.1.5.1 STATUS OF TASKS (IN DIAGRAMS AND GRAPHS) |
| 8.B.20 REFERS TO FIGURE AMMUNITION SECTION IN FIGURE 8B IN THE DOCUMENT (MODELLED FOR ENGINEERING SUPPORT BUILDING) | 19.5 (16.3) REFERS TO ENGINEERING SUPPORT RECORDS MODELLED ON HOSPITAL RECORDS BUT FOR ENGINEERING |
| 15.4 REFERS TO ISSUING AND DELIVERY SCHEDULE OF AMMUNITION (MODELLED FOR CANTEEN) | 19.5.1 FINANCIALS |
| | 19.5.2 DEPOT RECORDS |
| | 19.5.3 BLUE PRINTS |
| 19.4 CURRENT TASKS | 19.5.4 PROCUREMENT RECORDS |
| 19.4.1 CURRENT TASK WINDOW | |
| 19.4.1.1 TASKS | |
| 19.4.1.1.1 DIGITAL SCANS OF TASK ORDER | |
| 19.4.1.1.2 TASK HISTORY | |
| 19.4.1.2 CREW | |

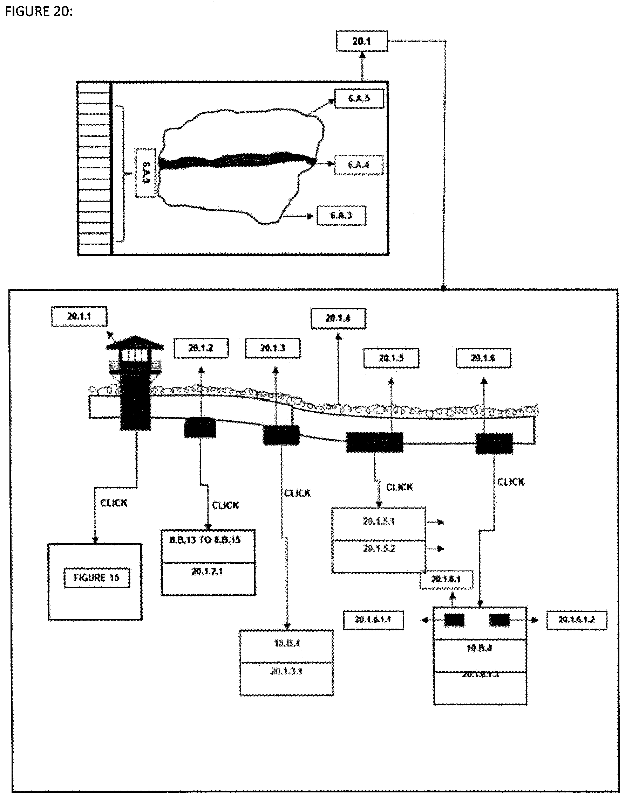

### Legend for Figure 20:

| | |
|---|---|
| 6.A.4 REFERS TO INTERNATIONAL BORDERS | 20.1.5 MOTION SENSORS |
| 6.A.5 REFERS TO EXTERNAL SECTOR (E1) | 20.1.5.1 MOTION SENSOR TRACKING SCREEN |
| 6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS. | 20.1.5.2 GPS COORDINATES |
| | 20.1.6 LIGHTS |
| | 20.1.6.1 LIGHT CONTROLS |
| 20.1 REFERS TO HOLOGRAMIC IMAGE OF AREA | 20.1.6.1.1 ON |
| 20.1.1 GUARD TOWERS HOLOGRAM | 20.1.6.1.2 OFF |
| 15 REFERS TO FIGURE 15 OF THE DOCUMENT MODELLED FOR THIS SECTION | 10.B.4 REFERS TO SENSORS SECTION OF THE DOCUMENT MODELLED FOR THIS SECTION |
| 20.1.2 VIDEO | 20.1.6.1.3 GPS COORDINATES |
| 8.B.13 TO 8.B.15 REFERS TO VIDEO FEED SECTION OF FIGURE 8 MODELLED FOR THIS SECTION | |
| 20.1.2.1 GPS COORDINATES | |
| 20.1.3 SENSORS | |
| 10.B.4 REFERS TO SENSOR SECTION IN FIGURE 10B MODELLED FOR THIS SECTION | |
| 20.1.3.1 GPS COORDINATES | |
| 20.1.4 BARBED WIRES WITH MOTION SENSORS AND ELECTRIFICATION | |

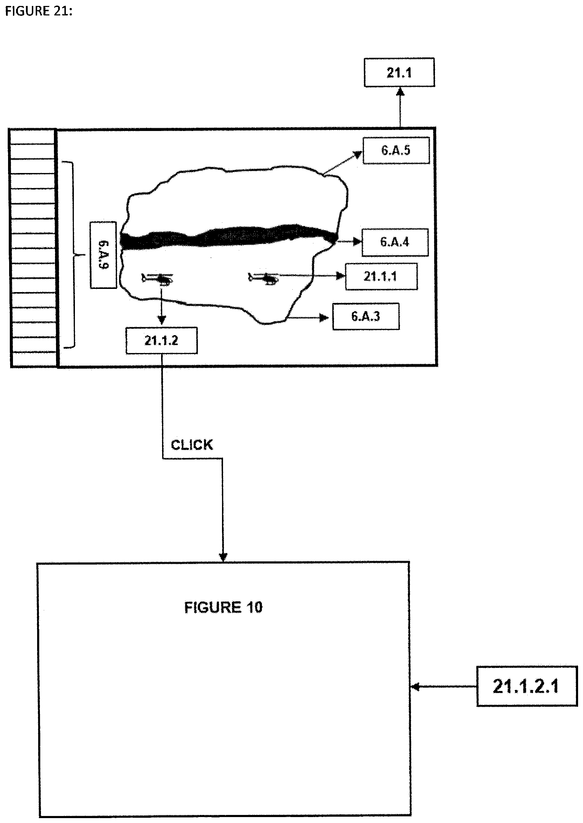

### Legend for Figure 21:

### 6.A.4 REFERS TO INTERNATIONAL BORDERS

6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
21.1 REFERS TO HOLOGRAMIC IMAGE OF ASSETS
21.1.1 HOLOGRAMIC IMAGE OF HELICOPTER (ASSET)
21.1.2 HOLOGRAMIC IMAGE OF AIRPLANE (ASSET)
21.1.2.1 HOLOGRAMIC IMAGE OF SELECTED ASSET.
10 REFERS TO FIGURE 10B IN DOCUMENT MODELLED TO SHOW THE SELECTED ASSET IN THIS SECTION

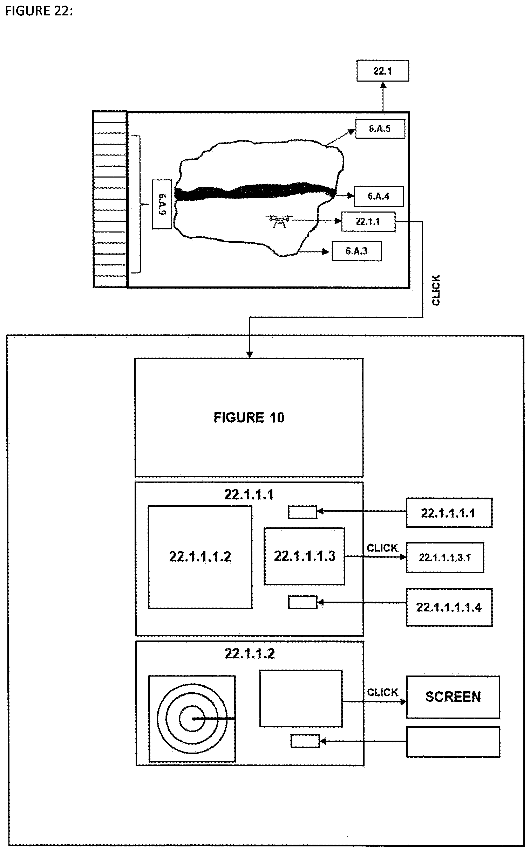

### Legend for Figure 22:

### 6.A.4 REFERS TO INTERNATIONAL BORDERS

6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
22.1 HOLOGRAMIC IMAGE OF ASSETS
22.1.1 REFERS TO UAV/DRONES
10 REFERS TO FIGURE 10B IN THE DOCUMENT MODIFIED FOR THIS SECTION
22.1.1.1 REFERS TO LIDAR
22.1.1.1.1 REFERS TO GPS COORDINATES
22.1.1.1.2 LIDAR FEED
22.1.1.3 AI ANALYTICS
22.1.1.3.1 AI BASED ANALYTICS
22.1.1.1.4 MAP AREA COVERED BY LIDAR
22.1.1.2 SAME AS LIDAR ABOVE BUT FOR SONAR

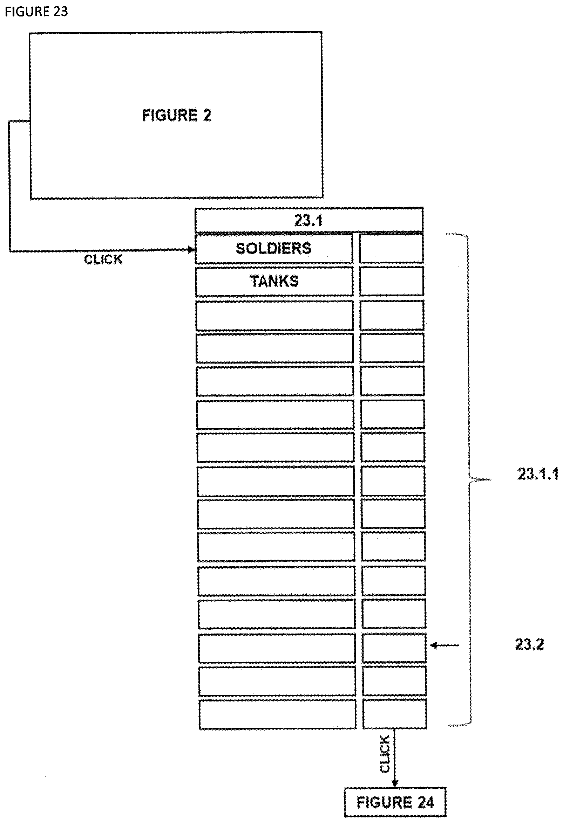

### Legend for Figure 23:

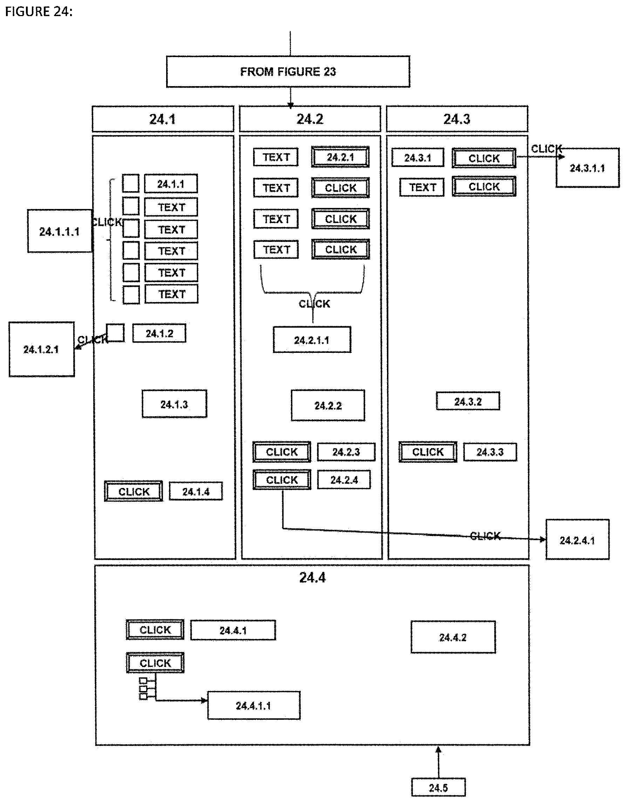

2 REFERS TO FIGURE 2 IN THE DOCUMENT. THIS IS A SAMPLE OF GENESIS AI SELECTION. USER SELECTS "ARMY AI" BUTTON IN THIS CASE
23.1 ALL ASSETS OF ARMY ARE LISTED
23.1.1 BUTTONS TO CLICK ON VARIOUS FOR GOING INTO DETAILED AI BASED ANALYTICS
24 REFERS TO FIGURE 24 OF THE DOCUMENT
23.2 HOLOGRAMIC IMAGE

### Legend for Figure 24:

23 REFERS TO FIGURE 23 IN THE DOCUMENT
24.1 REFERS TO DESCRIPTIVE AI & ANAYTICS OPERATIONS
24.1.1 GIVES DETAILED INFORMATION ON NO. OF SOLDIERS BY AGE, SKILLS, CAPABILTIES ETC AND CAN BE MODIFIED
24.1.1.1 OPENS A NEW SCREEN FOR SELECTED PARAMETER
24.1.2 DETAILS BY FATALITIES
24.1.2.1 OPENS UP SCREEN WITH ANALYTICS
24.1.3 CUSTOMISABLE BUTTON FOR REQUIRED PARAMETERS
24.1.4 MISSILE LAUNCH COVERAGE
24.2 PREDICTIVE AI ANALYTICS & OPERATIONS
24.2.1 BUTTONS FOR FATALITY PREDICTION, SOLDIER DISCHARGE PREDICTION ETC.
24.2.1.1 OPENS UP NEW SCREEN FOR SELECTED OPTION
24.2.2 CUSTOMISABLE BUTTON FOR VARIOUS REQUIRED PARAMETERS
24.2.3 NUCLEAR LAUNCH PREDICTION
24.2.4 LIVE WAR SCENARIO PREDICTIONS
24.2.4.1 OPENS SCREENS FOR SELECTION
24.3 PRESCRIPTIVE AI ANALTYICS & OPERATIONS
24.3.1 BUTTONS FOR INFILTRATE PRESCRIPTIVE, WAR SCENARIO PRESCRIPTIVE ETC.
24.3.1.1 OPENS SCREEN FOR SELECTION
24.3.2 BUTTONS FOR ALL POSSIBLE REQUIRED PARAMETERS
24.3.3 MISSILE TARGET ALLOCATION
24.4 AI COGNITIVE ANALYTICS & OPERATIONS (WARNING: AUTONOMY GIVEN TO AI)
24.4.1 NUCLEAR LAUNCH (AI CONTROLLED)
24.4.1.1 SCREEN OPENS UP
24.4.2 CUSTOMISABLE BUTTON FOR ALL REQUIRED PARAMETERS
24.5 HOLOGRAMIC IMAGE

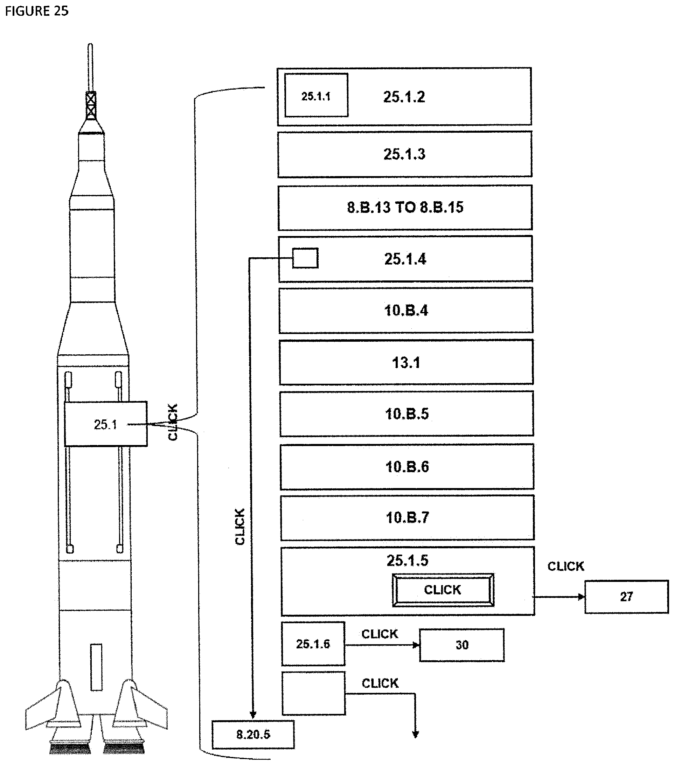

### Legend for Figure 25:

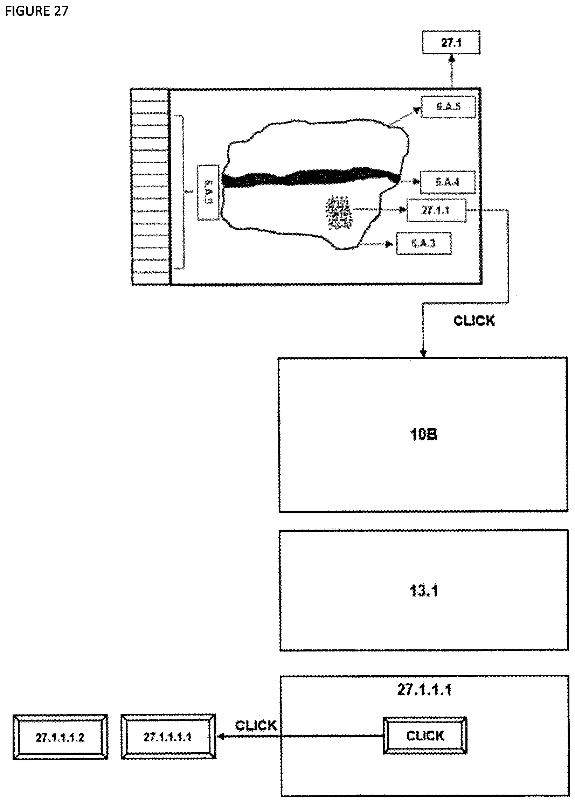

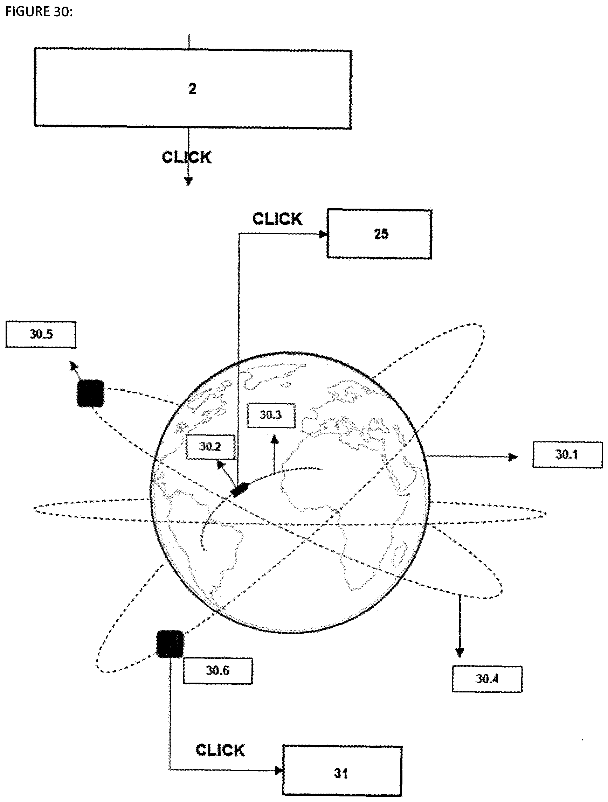

25.1 HOLOGRAM OF ROCKET/MISSILE
25.1.1 ACTUAL PHOTO
25.1.2 DETAILS OF THE ROCKET/MISSILE
25.1.3 GPS COORDINATES
8.B.13 TO 8.B.15 REFERS TO VIDEO FEED UNDER FIGURE 8
25.1.4 PAYLOAD DETAILS
8.B.20.5 REFERS TO AMMUNITION STOCK SECTION OF FIGURE 8B
10.B.4 REFERS TO SENSOR SECTION IN FIGURE 10B
13.1 REFERS TO RADAR FEED SECTION IN FIGURE 13
10.B.5 REFERS TO MANUAL SECTION OF FIGURE 10B OF THE DOCUMENT (MODELLED FOR THIS SECTION)
10.B.6 REFERS TO FIGURE 10B (MODELLED FOR THIS SECTION)
10.B.7 REFERS TO MECHANICAL COMPONENTS IN FIGURE 10B OF THIS DOCUMENT (MODELLED FOR THIS SECTION)
25.1.5 SELF DESTRUCT BUTTON
27 REFERS TO FIGURE 27 OF THE DIAGRAM
25.1.6 MISSILE TRAJACTORY
30 REFERS TO FIGURE 30 OF THE DIAGRAM

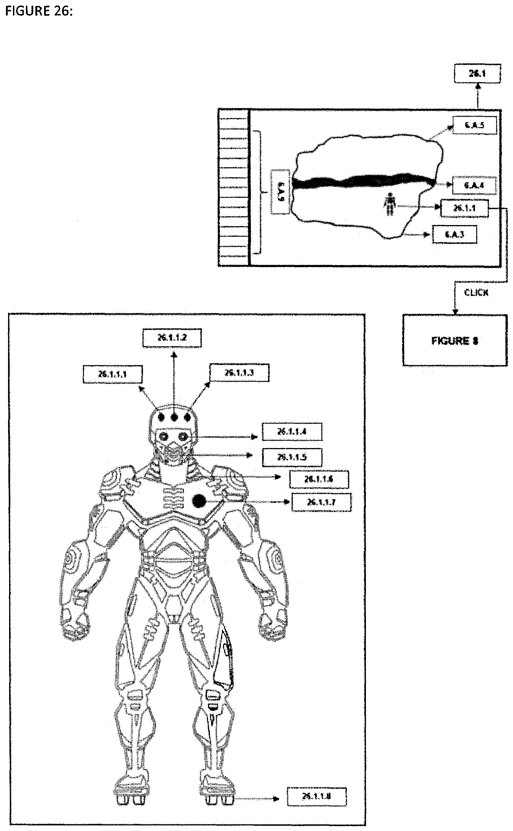

### Legend for Figure 26:

6.A.3 INTERNAL SECTOR (I1)
6.A.4 REFERS TO INTERNATIONAL BORDERS
6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
26.1 HOLOGRAMIC IMAGE OF THE ASSET
26.1.1 REFERS TO HOLOGRAM OF THE ROBOT
8 REFERS TO FIGURE 8B OF THE DOCUMENT
26.1.1.1 NIGHT VISION CAMERA
26.1.1.2 THERMAL VISION CAMERA
26.1.1.3 NORMAL VIDEO
26.1.1.4 CAMERA
26.1.1.5 SPEAKER
26.1.1.6 STEEL/TITANIUM OR AN ALLOY BULLET PROOF ARMOUR
26.1.1.7 SENSORS
26.1.18 WHEELS CAN COME OUT AS REQUIRED

### Legend for Figure 27:

6.A.3 INTERNAL SECTOR (I1)
6.A.4 REFERS TO INTERNATIONAL BORDERS
6.A.5 REFERS TO EXTERNAL SECTOR (E1)
6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS.
27.1 REFERS TO HOLOGRAMIC IMAGE
27.1.1 REFERS TO HOLOGRAMIC IMAGE OF SWARM ROBOTS
10B REFERS TO IMAGE 10B IN DOCUMENT (MODELLED FOR THIS SECTION LEAVING OUT CREW SECTION)
13.1 REFERS TO RADAR FEED FROM FIGURE 13 OF THE DOCUMENT
27.1.1.1 REFERS TO SELF DESTRUCT BUTTON
27.1.1.1.1 NO
27.1.1.1.2 YES

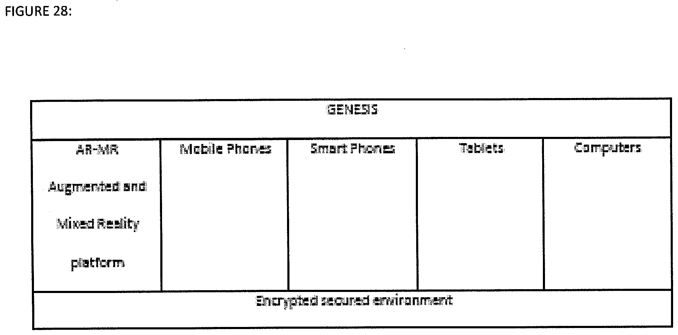

### Legend for Figure 28:

Figure 28: shows AR-MR platform and its applicability on different modes such as Mobile phones, smart phones, tablets and computers in an encrypted secured environment.

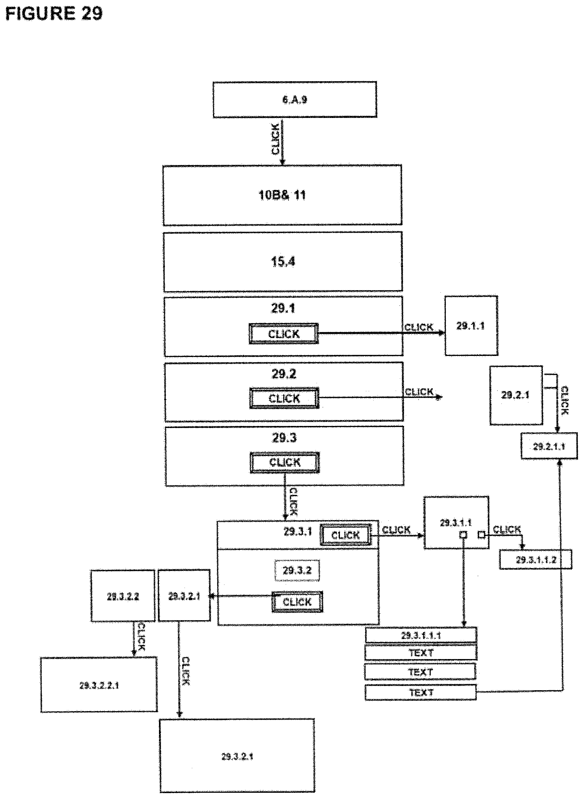

### Legend for Figure 29:

6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND. IN THIS CASE SHOWING ARMY ASSETS. IN THIS CASE VEHICLE IS SELECTED
10B& 11 REFERS TO FIGURE 10B AND 11 FROM THE DOCUMENT
15.4 REFERS TO ISSUING AND DELIVERY SCHEDULE OF AMMUNATION IN THE DOCUMENT (MODELLED FOR THIS SECTION)
29.1 REFERS TO AUTHORIZATION RECORDS
29.1.1 AUTHORIZATION RECORDS OPEN
29.2 REFERS TO ALL CUSTOM RECORDS
29.2.1 CUSTOM RECORDS RELATED TO TRUCK
29.2.1.1 CUSTOM RECORDS SCREEN OPEN UP
29.3 CARGO DETAILS
29.3.1 CARGO LIST OPENS
29.3.1.1 CARGO DETAILS
29.3.1.1.1 CARGO DETAILS
29.2.1.1 CUSTOM RECORDS SCREEN OPEN UP
29.3.2 CARGO LOADING/UNLOADING
29.3.2.1 LOADING/UNLOADING PERFORMANCE
29.3.2.1.1 LOADING/TIME METRICS+ AI ANALYTICS
29.3.2.2 LOADING/UNLOADING SCHEDULES
29.3.2.2.1 OPENS UP SCREEN

### Legend for Figure 30:

2 REFERS TO FIGURE 2 IN THE DOCUMENT
30.1 HOLOGRAM OF ROTATING EARTH
30.2 HOLOGRAM OF MISSILE TRAJECTORY
30.3 MISSILE HOLOGRAM
25 REFERS FIGURE 25
30.4 HOLOGRAM LINE SHOWING ORBIT OF THE ORBITING ASSET
30.5 HOLOGRAM OF ALL ORBITING SPACE WEAPONS
30.6 HOLOGRAM OF ALL ORBITING SPACE WEAPONS

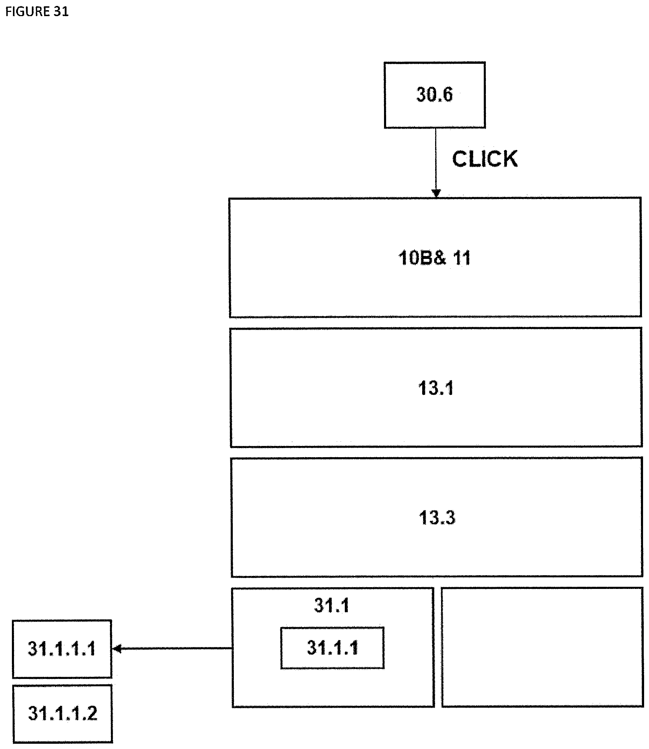

### Legend for Figure 31:

30.6 REFERS TO FIGURE 30 LINKAGE IN THE DOCUMENT
10B&11 REFERS TO FIGURE 10B AND 11 IN THE DOCUMENT
13.1 REFERS RADER FEED FROM FIGURE 13 IN THE DOCUMENT
13.3 TO LINKED ASSETS FEED FROM FIGURE 13 IN THE DOCUMENT
31.1 HISTORICAL VIDEOS/PHOTOS
31.1.1 SPACE ASSET LAUNCH RECORDS
31.1.1.1 VIDEO ARCHIVES
31.1.1.2 PHOTO ARCHIVES

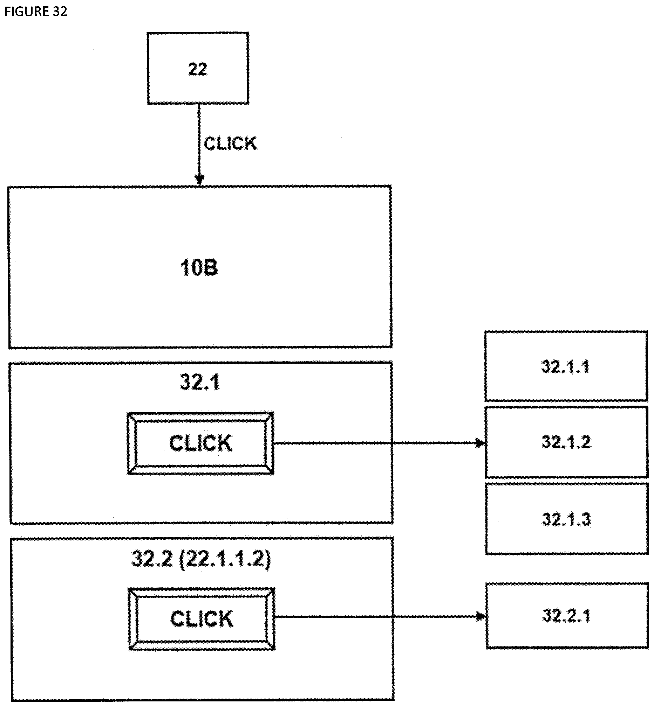

### Legend for Figure 32

22 REFERS TO FIGURE 22 IN THE DOCUMENT
10B REFERS TO FIGURE 10B IN THE DOCUMENT
32.1 DETAILS ABOUT THE SOLAR POWER OF DRONE
32.1.1 SHOWING GAUGES
32.1.2 SHOWING BATTERY
32.1.3 RETURN TO CHARGING
32.2 (22.1.1.2) REFERS TO SONAR FEED IN THE DOCUMENT
32.2.1 REFERS TO SONAR SCREENS& FEEDS OPENS UP

### DETAILED DESCRIPTION OF THE INVENTION WITH REFERENCE TO DRAWING/EXAMPLES

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. Although any methods similar or equivalent to those described herein can be used in the practice or testing of embodiments of the present disclosure, the exemplary, methods are now described.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

As shown in Figure 1, to Start GENESIS, 1.2 USER (HUMAN/ALIEN/ROBOT) can:
A. USER (HUMAN/ALIEN/ROBOT) Wear SMART Glass /Eyewear (1.1) with Augmented Reality (AR) - Mixed Reality (MR) holographic projection capability
   or
B. 1.2 USER (HUMAN/ALIEN/ROBOT) starts device with Augmented Reality (AR) - Mixed Reality (MR) holographic projection capability

Post Starting GENESIS,1.2 USER (HUMAN/ALIEN/ROBOT) sees HOLOGRAM IN Augmented Reality-Mixed Reality BOX with 1.4 HOLOHRAMIC TEXT IN Augmented Reality -Mixed Reality and 1.5 CLICKABLE BUTTON OR "VOICE COMMAND ACTIVATED". The user can also see the physical environment around him in AR-MR.

1.5 CLICKABLE BUTTON OR "VOICE COMMAND ACTIVATED" brings 1.2 USER (HUMAN/ALIEN/ROBOT) to 2.3 REFERS TO HOLOGRAMIC AR-MR SCREEN BOX which comprises of 2.1 REFERS TO GENESIS CENTRAL COMMAND and 2.2 REFERS TO GENESIS AI -ARTIFICIAL INTELLIGENCE as shown in figure 2. Each of the Parameters (shown as boxes) in 2.4 REFERS TO VARIOUS CLICKABLE BUTTONS IN CENTRAL COMMAND AND 2.5 REFERS TO GENESIS AI-ARTIFICAL COMMAND

As an example, 1.2 USER (HUMAN/ALIEN/ROBOT) selects "Army Command" parameter from figure 2. This opens screen of figure 3. Same happens when 1.2 USER (HUMAN/ALIEN/ROBOT) selects any parameter box as shown in 2.4 REFERS TO VARIOUS CLICKABLE BUTTONS IN CENTRAL COMMAND AND 2.5 REFERS TO GENESIS AI-ARTIFICAL COMMAND. In Screen of figure 3, 3.1 REFERS TO ARMY COMMAND OF VARIOUS NATIONS with options to select 3.1.1 CLICKABLE BUTTONS FOR COUNTRIES. In Screen of figure 3, 3.2 REFERS TO JOINT FORCES OF NATIONS with options to select 3.2.1 CLICKABLE BUTTONS OF JOINT FORCES OF NATIONS. The entire figure 3 screen is 3.3 REFERS TO HOLOGRAMIC AR-MR SCREEN

As an example, User selects country "India" in figure 3. This opens screen of figure 4 as a holographic map of the selected country as shown in 4.2 REFERS TO HOLOGRAM MAP. The entire figure 3 screen is 4.1 REFERS TO HOLOGRAMIC AR-MR SCREEN. The detailed description of figure 4 is shown in figure 5.

In figure 5, the entire selected country's map is shown as 5.8 REFERS TO HOLOGRAM MAP OF SELECTED COUNTRY is broken by GENESIS into sectors; 5.3 ALL INTERNAL SECTORS, 5.8 ALL EXTERNAL SECTORS, 5.1 EXTERNAL SECTOR CONSISITING OF MARITIME BOUNDARY. 5.8 REFERS TO HOLOGRAM MAP OF SELECTED COUNTRY also shows 5.2 INTERNATIONAL BORDER IN HOLOGRAM, 5.7 HOLOGRAM IMAGE OF 100 KM EXTERNAL AREA FROM INTERNATIONAL BORDER and 5.1 EXTERNAL SECTOR CONSISITING OF MARITIME BOUNDARY. The .2 USER (HUMAN/ALIEN/ROBOT) also has the option buttons of 5.4 HOLOGRAM CLICKABLE BACK BUTTON to go to previous screen of GENESIS, 5.5 GENESIS CENTRAL COMMAND BUTTON which leads to 5.5.1 TAKES TO FIGURE 2. All the Alphabets and Numbers in all screens of GENESIS are also as 5.6 HOLOGRAM ALPHABETS AND NUMBER IN AR AND MR. User can click on any Internal sectors or boundaries on the hologram and it opens to figure 6.A (Air View- Hologram projected in Air) or 6.B(Hologram Projected on Ground). All countries of the world are to be made in GENESIS like this.

Figure 6.A depicts the macro view of hologram Air projection (6.A.11 REFERS TO HOLOGRAM BOX) of selected sector of a country; 6.A.3 INTERNAL SECTOR (I1), 6.A.4 INTERNATIONAL BORDER and 6.A.5 EXTERNAL SECTOR (E1). User also has the option to go to earlier screens of Genesis by using the 6.A.6 BACK BUTTON or to go to Genesis Central Command using button 6.A.7 GENESIS CENTRAL COMMAND BUTTON which takes him to figure 2. The user has all the Buttons to select any "Live Digital Asset" connected to GENESIS as shown in 6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND and can also combine all the assets by using 6.A.10 BUTTON WHICH COMBINS ALL ASSETS. The User can also view previous Satellite Images of any chosen sector using 6.A.1 SATELLITE IMAGE or live satellite images of any chosen sector using 6.A.2 E1+I1 LIVE SATELLITE IMAGE. The Figure 6.B depicts the macro view of hologram Ground projection (6.B.3 HOLOGRAM PROJECTION ON GROUND) of selected sector of a country with user (6.B.1 USER) using 6.B.2 SMART GLASSES WITH AR-MR TECHNOLOGY.

As an example, when User clicks on "Army Asset Button" (6.A.9 BUTTONS TO SHOW ALL LIVE ASSETS IN E1+I1 CLASSIFIED AS ARMY, NAVY, AIR FORCE, SPECIAL FORCES, NUCLEAR ETC. AS PER GENESIS CENTRAL COMMAND), Figure 7 opens up showing all Live Digital Assets in Hologram Projections such as 6.A.9.1 FORWARD OPERATING BASE HOLOGRAM , 6.A.9.2 AND 6.A.9.3 SOLDIERS HOLOGRAM (based on Types of Divisions, Speciality of Solders etc , for example: paratrooper, Special Forces etc.), 6.A.9.4 ROCKET LAUNCHER HOLOGRAM, 6.A.9.5 MISSILE LAUNCHER HOLOGRAM, 6.A.9.6 ARTILERY MACHINE HOLOGRAM , 6.A.9.7 TANK HOLOGRAM. NOTE: **EVERY SINGLE ASSETS HOLOGRAM IS ALSO CLICKABLE. ALL AND EVERY TYPE OF ASSETS OF EVERY COUNTRY AND ALL TYPES OF ITS DEFENSE FORCES, LAW ENFORCEMENT FORCES AND ANY OTHER FORCES IS AVAILABE IN GENESIS AS A DIGITAL ASSET. EACH AND ALL DIGITAL ASSETS ARE REPRESENTED WITH A SPECIFIC HOLOGRAM OF THAT ASSET IN GENESIS.** OTHER EXAMPLES OF ASSETS OF ARMY IN GENESIS ARE (but not limited to): SOLDIERS (BATTALION DIVISION WISE), MISSILES (DIFFERENT TYPES), TANKS (ALL TYPES), ROCKET LAUNCHER (TYPES, FORWARD OPERATING BASES, AMMUNITION (ALL TYPES), ARTILLERY GUNS (ALL TYPES, ARM JEEPS, CARS, TRUCKS AND BIKES, MOBILE MISSILE UNITS, ENGINEERING SUPPORT VEHICLES, MINE LAYING VEHICLES, MINE CLEARING VEHICLES, HOVERCRAFTS, UNMANNED ROBOTS, DRONES -UAVS, SWAMP BOATS, HELICOPTERS, AIRCRAFTS, TANK DESTROYERS, ARMOURED AMBULANCES, MEDICS, MEDICAL FACILITES AND SUPPLIES, AIR DEFENSE MOBILE UNITS, AIR DEFENSE MISSILES, COMBAT VEHICLES (ARMOURED CARRIERS), ROBOT SOLDIER, ORDINANCES, FOOD etc.
Figure 8.A depicts the example of screen that opens when user clicks on Hologram of "Live Digital Asset" of a 6.A.9.3 SOLDIERS HOLOGRAM (based on Types of Divisions, Speciality of Solders etc, for example: paratrooper, Special Forces etc.) in GENESIS. For Example, Different types of Soldiers holograms are depicted as 8.A.1 HOLOGRAM OF SOLDIERS, 8.A.1.1 MEDIC TO SHOW MEDICAL SIGN ON ITS HOLOGRAM, 8.A.1.2 SPECIAL FORCES SOLDIERS TO SHOW SKULL SIGN ON ITS HOLOGRAM.

Figure 8.B is the detailed screen of 6.A.9.3 SOLDIER HOLOGRAM. 8.B.1 REFERS TO ACTUAL PHOTO OF THE SOLDIER and all SOLDIER DETAILS mentioned (Name, Age, Rank, Battalion/Division, ID no etc.). The communication section of the holographic screen has various modes of communication with the soldier like 8.B.2 REFERS TO WHATSAPP/TEXT MESSAGE which opens to further 8.B.2.1 REFERS TO TEXT SCREEN, 8.B.3 PHONE which opens to further 8.B.3.1 PHONE DIALPAD, 8.B.4 SKYPE which opens to further 8.B.4.1 SKYPE VIDEO FEED, 8.B.5 TRANSLATION which opens to further 8.B.5.1 DIFFERENT LANGUAGE OPTIONS which upon selection of language in 8.B.5.1.1 AI CONVERTS ALL FIELDS TO SELECTED LANGUAGE IN GENESIS SCREENS , 8.B.6 EMAIL , 8.B.7 GOOGLE ICON which opens to further screens of 8.B.7.1 GOOGLE SEARCH, 8.B.8 SPEAKER and a button for 8.B.9 MUTE for the volume of call/speaker. The records section 8.B.10 RECORDS opens to further screens of 8.B.10.1 DETAILS OF SERVICE RECORDS which further open to 8.B.10.1.1 SCANS OF ALL SERVICE RECORDS OPEN. The key specifications/skills of soldier are also listed in 8.B.11 KEY SPECIFICATION OF SOLDIER such as paratrooper, sniper, medic, etc. upon clicking the 8.B.12 VITALS OF SOLDIER, further screens open showing various body vitals such as 8.B.12.1 HEART BEAT, 8.B.12.2 BODY TEMPERATURE, 8.B.12.3 BLOOD PRESSURE , 8.B.12.4 BODY POSTURE, 8.B.12.5 FATIGUE RATE, 8.B.12.6 DISTANCE WALKED, 8.B.12.7 BODY OXYGEN, 8.B.12.8 SWEAT/BODY WATER, 8.B.12.9 STRESS LEVEL, 8.B.12.9.1. More vitals can be added as needed. Each Vital screen further opens into Ai-Analytics screens such as HOURLY HEART RATE, 8.B.12.9.2 WEEKLY HEART RATE, 8.B.12.9.3 MONTHLY HEART RATE. Clicking on SENSORS takes you to figure 10. Clicking on types of Video feeds such as 8.B.13 NORMAL CAMERA, 8.B.14 NIGHT VISION, 8.B.15 THERMAL VISION takes you to 8.B.16 AI BASED VIDEO FEED. AI CAN DETECT FACE+ARM+ AMMUNATION. Figure 8.B also shows live 8.B.17 GPS COORDINATES of the SOLDIER. There are also details available on screen of 8.B.18 RANKING OFFICER DETAILS of the SOLDIER and the details of Ranking officer such as 8.B.18.1 NAME AND PHOTO and communication screens of 8.B.18.2 CALL, 8.B.18.3 SKYPE, 8.B.18.4 WHATSAPP to contact the ranking officer. Upon clicking the button 8.B.18.5 HOLOGRAM OF RANKING SOLDIER, the hologram of the ranking officer becomes 8.B.18.5.1 SHOWS SOLDIER AS RED AND GREEN BASED ON E1/I1 so that it is easy to locate the ranking officer. Figure 8.B also has option to click 8.B.19 DUTY ROSTER which further opens to screens of 8.B.19.1 DAILY/MONTHL/YEARWISE DUTY SCHEDULE/ROSTER, 8.B.19.1.1 ATTENDANCE RECORDS, 8.B.19.1.2 LEAVE RECORDS and 8.B.19.1.3 DIGITAL SCANS OF ALL RECORDS. Figure 8.B also has option to click 8.B.20 AMMUNITION OF SOLDIERS which shows 8.B.20.2 BULLETS ISSUED, 8.B.20.3 USED, 8.B.20.4 BALANCE, 8.B.20.5 AMMUNITION STOCK. It also shows 8.B.20.1 DETAILS OF ARM which further opens to 8.B.20.1.1 DETAILS, Photo of Arm, 8.B.20.1.1.1 SERIAL NUMBER. For Example, in case of a gun, it opens all details of a gun such as 8.B.20.1.1.1.1 SCOPE VIDEO FEED, 8.B.20.1.1.2 MANUFACTURER, 8.B.20.1.1.2.1 GUN TEMPERATURE, 8.B.20.1.1.3 SPECIFICATIONS, 8.B.20.1.1.3.1 GUN LOCATOR GPS+MAP, 8.B.20.1.1.4 SERVICE HISTORY, 8.B.20.1.14.1 DIGITAL SERVICE MAINTAINCE RECORDS.

Figure 9 is an illustrative example of how to create a "Digital Twin" of a "Physical Asset" which is Soldier as an example in this figure. All Assets need to be made in digital twins and connected to GENESIS. The Soldier is wearing 9.1 BULLET PROOF HELMET, 9.2 HELMET MOUNTED SMART GLASS CONNECTED TO GENESIS PROJECT, 9.3 NIGHT VISION CAMERA, 9.4 THERMAL VISION CAMERA, 9.5 NORMAL VIDEO CAMERA, 9.6 WIRELESS EAR BUDS, 9.7 GPS LOCATOR, 9.8 MIKE TO SPEAK 9.9 BODY PATCH CONNECTED TO 8.B.12 VITALS OF SOLDIER of Figure 8.B, 9.10 PHONE + TEXT DIAL PAD, 9.11 SMART WATCH. An example of a "Digital Twin"9.12 DIGITAL TWIN OF A RIFLE depicts 9.12.1 SCOPE SENSOR FOR VIDEO FEED, 9.12.2 BULLET, 9.12.3 BULLET MAGAZINE SENSOR to calculate ammunition stock of the rifle(how many bullets fired and how many left in the magazine of the rifle), 9.12.4 GPS LOCATOR, 9.12.5 GUN TEMPERATURE SENSOR, 9.12.6 BULLET WITH BULLET SENSOR (each bullet also has a sensor fitted inside to capture various parameters such as speed, trajectory, line of sight, etc.)

Figure 10.A depicts the example of screen (10.A.1 HOLOGRAM BOX AR-MR SCREEN) that opens when user clicks on Hologram of "Live Digital Asset" of a 10.A.1.1 HOLOGRAM OF TANK ONE or 10.A.1.2 HOLOGRAM OF TANK TWO in GENESIS. For Example, Different types of Tank holograms are depicted as based on Types of Tanks.
Figure 10.B is the detailed screen of 10.A.1.1 HOLOGRAM OF TANK ONE or 10.A.1.2 HOLOGRAM OF TANK TWO. The screen depicts 10.B.1 REFERS TO ACTUAL PHOTO OF THE TANK, 10.B.2 DETAILS OF THE TANK (for example 10.B.2.1 BASE, 10.B.2.2 DIVISIONS, 10.B.2.3 MAKE, 10.B.2.4 RANGE, 10.B.2.5 TYPE, 10.B.2.6 ARTILERY BARREL, 10.B.2.7 YEAR OF PRODUCTION and other details as required). Figure 10.B also shows 8.B.17 GPS COORDINATES (as shown in figure 8.B) of the digital asset, which is Tank in this case. The Screen of Figure 10.B also shows various modes of communication similar to figure 8.B such as 8.B.2 REFERS TO WHATSAPP/TEXT MESSAGE, 8.B.3 PHONE, 8.B.4 SKYPE, 8.B.5 TRANSLATION, 8.B.6 EMAIL, 8.B.7 GOOGLE ICON, 8.B.8 SPEAKER, 8.B.9 MUTE. On selecting any Tank crew of this digital asset, 10.B.3 TANK CREW, the screen of each tank crew opens like figure 8.B. User can click and select Video feeds to view and further screens open for 8.B.13 NORMAL CAMERA, 8.B.14 NIGHT VISION ,8. B.15 THERMAL VISION as figure 8.B. User can select and view various types of sensors like 10.B.4 TANK SENSOR FEEDS, 10.B.4.1 DISTANCE, 10.B.4.2 ALTITUDE, 10.B.4.3 TANK SENSORS, 10.B.4.4 WIND, 10.B.4.5 TEMPERATURE, 10.B.4.5.1 TEMPERATURE SCREENS, 10.B.4.6 FUEL, 10.B.4.6.1 GAUGE FOR CURRENT FUEL, 10.B.4.6.2 RATE OF FUEL CONSUMPTION, 10.B.4.7 SPEED, 10.B.4.7.1 SPEED SCREENS, 10.B.4.8 HUMIDITY, 10.B.4.8.1 HUMIDITY SCREENS, 10.B.4.9 AIR, 10.B.4.10 WATER, 10.B.4.11 POWER and further screens of each sensor open. User can also view different types of 10.B.5 MANUALS by selecting 10.B.5.1 OPERATIONS MANUAL, 10.B.5.2 MAINTAINENCE MANUAL, 10.B.5.2.1 DIGITAL BLUE PRINT OF TANK, 10.B.5.3 SERVICE/MAITAINENCE RECORDS, 10.B.5.4 EMERGENCY MANUAL which opens further screens for 10.B.5.1.1 DIGITAL SCANS OF MANUAL FOR TANK SYSTEMS, 10.B.5.3.1 SCREEN FOR RECORDS, 10.B.5.4.1 SCREEN FOR MANUAL etc. User and click and see details of different types of guns and weapons installed on the asset by 10.B.6 TANK GUN DETAILS. User can also operate weapons on the digital asset, for example 10.B.6.1 TANK GUN 1 with options to A LOAD, B FIRE, T TARGET or 10.B.6.2 TANK GUN 2 with options to A LOAD, B FIRE, T TARGET or 10.B.6.3 TANK GUN 3 with options to A LOAD, B FIRE, T TARGET. On clicking on T TARGET, further screens open for 10.B.6.3.T.1 LOAD TARGET SCREEN. User can also monitor Ammunition of the Tank (8 REFERS TO AMMUNITION SECTION OF FIGURE 8). The User can also select any mechanical components of the digital asset by clicking on 10.B.7 MECHANICAL COMPONENTS and this opens further selection buttons for all mechanical parts of digital asset. For example, 10.B.7.1 ENGINE, 10.B.7.2 BARREL, 10.B.7.3 WHEEL or any other parts 10.B.7.4 OTHER which is further illustrated in figure 11. User can also click on 10.B.8 RADAR FEED and 10.B.9 LIDAR FEED to open further screens of that feed. The user also has option to self-destruct the digital asset in physical world using 10.B.10 SELF DESTRUCT BUTTON in GENESIS. The user can also use the Self-Drive button in Genesis; 10.B.11 AUTONOMOUS DRIVE to let Ai (Artificial Intelligence) drive the digital asset. Further screens for self-drive open such as 10.B.11.1 VIDEO FEED, 10.B.11.1.1 START BUTTON, 10.B.11.1.2 OTHER SCREENS, 10.B.11.1.2.1 CONTROL SCREEN, 10.B.11.1.2.2 DESTINATION INPUT, 10.B.11.1.2.3 MAP LOCATOR, 10.B.11.1.3 ARRIVAL, 10.B.11.1.3.1 CURRENT LOCATION, 10.B.11.1.3.2 ESTIMATE TIME OF TRAVEL & ARRIVAL etc.

Figure 11 depicts an example of a mechanical part of 11.1 REFERS TO 3D HOLOGRAMIC IMAGE OF ENGINE (EACH PART CAN BE CLICKED) in this case the Engine. Similarly, all mechanical parts of all Assets in GENESIS need to be made. Clicking on any mechanical part of the asset in the hologram will open the holographic projection of the selected mechanical part. 11.1 REFERS TO 3D HOLOGRAMIC IMAGE OF ENGINE (EACH PART CAN BE CLICKED). Each part opens into its further screens such as 11.1.1 ENGINE PISTON, 11.1.2 ENGINE CHAMBER, 11.1.3 ALL ENGINE PARTS/SECTIONS, 11.1.4 OTHER PARTS. The screens of each part that open for example are 11.1.1.1 STATUS OF SENSORS*(* REFERS TO 10.B.4) which further opens 11.1.1.1.1 SCREENS OF SENSORS, 11.1.1.2 DETAILS OF ENGINE PARTS which further opens to more screens of 11.1.1.2.1 MAKE, 11.1.1.2.2 YEAR, 11.1.1.2.3 MANUFACTURER, 11.1.1.2.4 SERIAL NUMBER. Similarly screen of 11.1.1.3 SERVICE/MANUFACTURING DETAILS opens further to 11.1.1.3.1 MANUALS# (# REFERS TO 10.B.5). User can also click on 11.1.1.4 COMMUNICATION ENGINE MANUFACTURER* (* REFERS TO 10.B.4) to contact the manufacturer of that selected part. User can also select 11.1.1.5 AI BASED ANALYTICS OF ENGINE PART PERFORMANCE which opens further screens of 11.1.1.5.1 SCREEN FOR PARAMETERS TO BE MEASURED FOR ENGINE PARTS and 11.1.1.5.1.1 GRAPHS/VISUAL/DIAGRAMS OF AI ANALYTICS. This has to be developed for every part/component.

Figure 12 states that figure 10.A, Figure 10.B, Figure 11 needs to be made for all assets in GENESIS.

Figure 13 is an example of a "Digital Asset" of a Telecommunication Truck clicked by user from FIGURE 7. The screens of Figure 13 are combining FIGURE 8 (8.A and 8.B), 10 REFERS TO FIGURE 10 (10.A and 10.B) and 11 REFERS TO FIGURE 11. User can also click on 13.1 RADAR FEED which opens further screens, examples are 13.1.1 RADAR SCREEN OPENS UP. User also has option to click on 13.2 CLICKABLE BUTTONS FOR ALL ASSETS BEING TRACKED BY SELECTED TRUCK which leads to further screens of 13.3 ALL LINKED ASSETS ARE SHOWN THROUGH THE BUTTON.

Figure 14 is an example of a "Digital Asset" of a Forward Operating Base or Operating Base (14.1 REFERS TO HOLOGRAM OF OPERATING BASE). When user clicks on 14.1.1.1 SOLDIERS, it opens further screens for example 14.1.1.1.1 LIST OF ALL SOLDIERS IN THE CAMP which further opens figure 8.A and figure 8.B. When user clicks on 14.1.1.2 SENSORS and it opens further screens of SENSORS MENTIONED IN 10.B.4 which has further screens of 14.1.1.2.1 AI ANALYTICS FOR ALL THE SENSOR GENERATED DATA. When user click on 14.1.1.3 AMMUNATION DEPOT, it goes to figure 15. When user click on 14.1.1.4 MEDICAL FACILITIES IN THE CAMP, it goes to figure 16. When User clicks on 14.1.1.5 CANTEEN FACILITY IN THE CAMP, it goes to figure 17. When user clicks on 14.1.1.6 ENGINEERING SUPPORT FACILITY, it goes to figure 19. The Screen also depicts live 14.1.1.7 GPS COORDINATES OF THE CAMP. User can also communicate with operating base using communication section (8.B.2 TO 8.B.9 REFERS TO COMMUNICATION SECTION IN FIGURE 8. User can see Video feed of operating base using video feed section 8.B.13 TO 8.B.15 REFERS TO VIDEO FEED SECTION IN FIGURE 8. User can also contact and view ranking offer of the base by clicking on option (8.B.18 REFERS RANKING OFFICER DETAILS IN FIGURE 8).

Figure 15 is an example of a "Digital Asset" of an Ammunition Depot. When user clicks on the Holographic projection of an Ammunition depot in GENESIS, the AR-MR Hologram screen opens depicting 15.1 AMMUNATION FACILITY PHOTO, live details of 15.3 DETAILS OF GPS COORDINATES, details of all Crew (soldiers and staff working at the Ammunition Depot): 10.B.3 REFERS TO CREW DETAILS UNDER FIGURE 10. The screen also depicts 8.B.13 TO 8.B.15 REFERS TO VIDEO FEED UNDER FIGURE 8, 8.B.2 TO 8.B.9 REFERS TO COMMUNICATION SECTION FROM FIGURE 8, 10.B.4 REFERS TO SENSORS IN SECTION 10, 8.B.20 REFERS TO AMMUNATION OF SOLDIERS, 10.B.6 REFERS TO TANK GUN DETAILS (details of all Guns installed at Ammunition depot). The Screen also depicts 15.4 ISSUING AND DELIVERY SCHEDULE OF AMMUNITION which opens further screens; for example 15.4.1 TYPE OF AMMUNATION (REFERS TO FIGURE 8), 15.4.2 ISSUED TO which opens further screens of 15.4.2.1 BALANCE AMMUNATION LEFT IN STOCK AT DEPOT, Soldier to which Ammunition is issued to (REFERS to FIGURE 8, 8.B.20 AMMUNITION OF SOLDIERS, 15.4.3 INCHARGE SOLDIER (REFERS TO FIGURE 8 IN DOCUMENT), 15.4.4 DELIVERY SCHEDULE which opens to further screens of 15.4.4.1 DELIVERY DETAILS comprising of more screens of delivery details for 15.4.4.1.1 DAY, 15.4.4.1.2 MONTH,15.4.4.1.3 YEAR, 15.4.4.1.4 SCREEN FOR DETAIL OF AMMUNITION which opens to further screens of 15.4.4.1.4.1 BUTTON TO CHECK RECORDS which opens to screen of 15.4.4.1.4.1.1 DIGITAL RECORDS/SCANS FOR EACH DELIVERY and 15.4.4.1.4.2 BUTTON FOR AI BASED ANALYTICS which opens to further screens of 15.4.4.1.4.2.1 AI BASED ANALYTICS FOR EACH PARAMETER. The Screen also depicts 15.4.5 OPTION TO ADD ADDITIONAL FIELD ON SCREENS.

Figure 16 shows an example of a "Digital Asset" of a Medical Facility or a Hospital. When user clicks on Holographic projection of Hospital in GENESIS, the Holographic screen appears depicting 16.1 REFERS TO PHOTO OF FACILITY, live 16.2 REFERS TO DETAILS OF GPS COORDINATES. The screen also shows all personnel working in the digital asset (10.B.3 REFERS TO TANK CREW SECTION OF FIGURE 10B IN THE DOCUMENT). The screen also depicts all sensor feeds (10.B.4 REFERS TO SENSORS SECTION OF FIGURE 10B IN THE DOCUMENT). User can also communicate with the Hospital using communication buttons (8.B.2 TO 8.B.9 REFERS TO COMMUNICATION SECTION OF FIGURE 8B IN THE DOCUMENT) which opens further screens. User can also view the Video feeds of entire hospital (8.B.13 TO 8.B.15 REFERS TO VIDEO FEED SECTION OF FIGURE 8B IN THE DOCUMENT) which opens further screens. User can also click and see all items and deliveries of hospital (15.4 REFERS TO ISSUING AND DELIVERY SCHEDULE OF AMMUNITION (BUT MODELLED FOR HOSPITAL ITEMS) which opens further screens in AR-MR and also see Hospital Sock (REFER To 8B). User can also click and see 16.2 HOSPITAL OCCUPANCY which opens further screens 16.2.1 CLICKABLE BUTTONS opening into all departments of hospital (16.2.1.1 & 16.2.1.2 REFERS DEPARTMENTS). As an example, a department 16.2.1.3 DEPARTMENTS open into further screens 16.2.1.3.1 CLICKABLE BUTTON which opens into further screens of wards of that department 16.2.1.3.2 WARDS OF THAT DEPARTMENT which further opens to FIGURE 18 OF THE DOCUMENT. User can also click on 16.3 HOSPITAL RECORDS which opens further screens of 16.3.1 CLAIMS which further opens to screens of 16.3.1.1 CLAIMS ERP DATA, 16.3.2 PATIENT FILES which further opens to 16.3.2.1 LINKS OT MEDICAL RECORD IN FIGURE 18, 16.3.3 FINANCIAL RECORDS which further opens to screens of 16.3.3.1 FINANCIAL ERP and 16.3.3.1.1 DIGITAL SCANS OF ALL FINANCIAL RECORDS, 16.3.4 DEPARTMENT RECORD which further opens to screens of 16.3.4.1 WARD REPORTS and its scans 16.3.4.1.1 DIGITAL SCANS, 16.3.5 PROCUREMENT RECORDS which further opens to screens of 16.3.5.1 PROCUREMENT ERP, 16.3.6 HOSPITAL BLUEPRINT which further opens to screens of 16 3.6.1 DIGITAL DRAWINGS.

Figure 17 shows an example of a "Digital Asset" of an Army Canteen. When user clicks on Holographic projection of canteen in GENESIS, the Holographic screen appears depicting 17.1 ACTUAL PHOTO OF THE CANTEEN, Live 17.2 GPS COORDINATES OF THE CANTEEN. The screen also shows all personnel working in the digital asset 10.B.3 REFERS TO TANK CREW SECTION OF FIGURE 10B IN THE DOCUMENT (MODELLED FOR CANTEEN). The screen also depicts all sensor feeds (10.B.4 REFERS TO SENSORS SECTION OF FIGURE 10B IN THE DOCUMENT). User can also communicate with the canteen using communication buttons (8.B.2 TO 8.B.9 REFERS TO COMMUNICATION SECTION OF FIGURE 8B IN THE DOCUMENT) which opens further screens. User can also view the Video feeds of entire canteen (8.B.13 TO 8.B.15 REFERS TO VIDEO FEED SECTION OF FIGURE 8B IN THE DOCUMENT) which opens further screens. User can also click and see all items and deliveries of canteen (15.4 REFERS TO ISSUING AND DELIVERY SCHEDULE OF AMMUNITION (MODELLED FOR CANTEEN) which opens further screens in AR-MR and see canteen Sock (8.B.20 REFERS TO FIGURE AMMUNITION SECTION IN FIGURE 8B IN THE DOCUMENT). User can also click on 17.4 CANTEEN MENU which opens to further screens of 17.4.1 DAILY MENU which is further clickable to 17.4.1.1 MENU DETAILS AND CREW DETAILS and 17.4.1.1.1 GIVES AI ANALYTICS ON MENU, 17.4.2 WEEKLY MENU which opens to further screens and 17.4.3 MONTHLY MENU which opens to further screens. User can also view duty roster of canteen 8.B.19 REFERS TO DUTY ROSTER FROM FIGURE 8B IN THE DOCUMENT. User can also click on 17.5 CANTEEN BLUEPRINT which opens further screens of 17.5.1 SEATING AREA PLAN OF THE CANTEEN. User can also click on 17.6 FOOD WASTAGE DETAILS which opens further screens of 17.6.1 GIVES DETAILED REPORT ON WASTAGE and 17.6.1.1 AI ANALYTICS ON WASTAGE. User can also click on 17.7 FOOD CONSUMPTION REPORT which opens further screens of 17.7.1 DETAILED REPORT ON FOOD CONSUMPTION and 17.7.1.1 AI ANALYTICS BASED REPORT ON FOOD CONSUMPTION.

When user clicks 16.2.1.3 DEPARTMENTS in Figure 16, Figure 18 opens with screen in Augmented Reality -Mixed Realty depicting 18.1 WARD DETAILS, 18.2 WARD BLUE PRINT which further opens to screens of 18.2.1 DIGITAL LAYOUT OF THE WARD, 18.3 WARD ROSTER which further opens to screens of 18.3.1 DETAILS OF PEOPLE ON DUTY. User can also click to know duty rosters (8.3.19 REFERS TO DUTY ROSTER IN FIGURE 8B (MODELLED FOR HOSPITAL). User can also click to open screen of 18.4 WARD OCCUPANCY which opens further screens of 18.4.1 PATIENT DETAILS which further opens screens of 18.4.1.1 PATIENT NAME leading to 18.4.1.1.1 FIGURE OPENS FOR EACH PATIENT, 18.4.1.2 ATTENDING MEDICAL STAFF. User can also click to open screens of 18.4.1.3 VITAL DETAILS(8.B.12 VITAL DETAILS TAKEN FROM 8B), 18.4.1.4 MEDICAL RECORD which opens into further screens of 18.4.1.4.1 MEDICAL RECORDS TABLE which opens further to 18.4.1.4.1.1 ILLNESS DETAILS leading to 18.4.1.4.1.1.1 SCAN AND RECORD OF ILLNESS, 18.4.1.4.1.2 RECORDS which opens into further screens of 18.4.1.4.1.1.2.1 SCANS OF ALL RECORDS , 18.4.1.4.1.3 TREATMENT which opens into further screens of 18.4.1.4.1.4 SCAN OF ALL TREATMENTS and 18.4.1.4.1.4 ANALYTICS. Analytics further opens into screens of 18.4.14.1.4.1 AI BASED PRESCRIPTIVE, DESCRITPTIVE AND REDICTIVE ANALYTICS. User can also click to open screens of 18.4.1.5 FAMILY RECORDS which opens further screens of 18.4.1.5.1 MEDICAL RECODS OF EACH MEMBER leading to screens of 18.4.1.5.1.1 SCAN OF MEDICAL RECORDS OF MEMBER 1, 18.4.1.5.1.2 SCAN OF MEDICAL RECORDS OF MEMBER 2 and more records of members.

Figure 19 is an example of a "Digital Asset" of an Engineering Support Building in Army. When user clicks on Holographic projection of an Engineering Building in GENESIS, the Holographic screen appears depicting 19.1 ACTUAL PHOTOS OF LOCATION, 19.2 DETAILS OF GPS COORDINATES, all personnel working in the building which can be individually clicked (10.B.3 REFERS TO TANK CREW SECTION OF FIGURE 10B IN THE DOCUMENT (MODELLED FOR ENGINEERING SUPPORT BUILDING. The screen also depicts all sensor feeds (10.B.4 REFERS TO SENSORS SECTION OF FIGURE 10B IN THE DOCUMENT). User can also communicate with the Engineering facility using communication buttons (8.B.2 TO 8.B.9 REFERS TO COMMUNICATION SECTION OF FIGURE 8B IN THE DOCUMENT) which opens further screens. User can also view the Video feeds of entire engineering facility (8.B.13 TO 8.B.15 REFERS TO VIDEO FEED SECTION OF FIGURE 8B IN THE DOCUMENT). User and click to see Engineering stock (8.B.20 REFERS TO FIGURE AMMUNITION SECTION IN FIGURE 8B IN THE DOCUMENT (MODELLED FOR ENGINEERING SUPPORT BUILDING) and see all items and deliveries (15.4 REFERS TO ISSUING AND DELIVERY SCHEDULE OF AMMUNITION (MODELLED FOR CANTEEN). User can click to see current ongoing Engineering - Maintenance tasks in the facility using 19.4 CURRENT TASKS which opens further screens of 19.4.1 CURRENT TASK WINDOW leading to more screens of 19.4.1.1 TASKS which further opens 19.4.1.1.1 DIGITAL SCANS OF TASK ORDER and 19.4.1.1.2 TASK HISTORY, Personnel allocated to each task using 19.4.1.2 CREW (10.B.3 REFERS TO TANK CREW SECTION 10B OF THIS DOCUMENT MODELLED FOR ENGINEERING). User can also click to open screens of 19.4.1.3 MANUALS (10.B.5 REFERS TO MANUALS SECTION OF FIGURE 10B OF THIS DOCUMENT), 19.4.1.4 MECHANICAL COMPONENTS (10.B.7 REFERS TO SECTION MANUAL SECTION OF FIGURE 10B OF THIS DOCUMENT MODELLED FOR ENGINEERING), 19.4.1.5 CURRENT STATUS which opens to further screens of 19.4.1.5.1 STATUS OF TASKS (IN DIAGRAMS AND GRAPHS). User can also click to see 19.5 ((16.3) REFERS TO ENGINEERING SUPPORT RECORDS MODELLED ON HOSPITAL RECORDS BUT FOR ENGINEERING) which opens to further screens of 19.5.1 FINANCIALS, 19.5.2 DEPOT RECORDS, 19.5.3 BLUE PRINTS, 19.5.4 PROCUREMENT RECORDS which further opens to more screens.

Figure 20 represents the "Digital Asset" of INTERNATIONAL BORDER (Also known as LINE OF ACTUAL CONTROL-LOC). User can click on holographic projections of AR-MR such as 20.1.1 GUARD TOWERS HOLOGRAM (15 REFERS TO FIGURE 15 OF THE DOCUMENT MODELLED FOR THIS SECTION) which opens further screens of 20.1.2 VIDEO (8.B.13 TO 8.B.15 REFERS TO VIDEO FEED SECTION OF FIGURE 8 MODELLED FOR THIS SECTION) leading to live 20.1.2.1 GPS COORDINATES. User can also click 20.1.3 SENSORS (10.B.4 REFERS TO SENSOR SECTION IN FIGURE 10B MODELLED FOR THIS SECTION) leading in to live 20.1.3.1 GPS COORDINATES. User can click 20.1.4 BARBED WIRES WITH MOTION SENSORS AND ELECTRIFICATION. User can also click on 20.1.5 MOTION SENSORS which opens further screens of 20.1.5.1 MOTION SENSOR TRACKING SCREEN and live 20.1.5.2 GPS COORDINATES. User can also click on 20.1.6 LIGHTS which opens further screens of 20.1.6.1 LIGHT CONTROLS, 20.1.6.1.1 ON, 20.1.6.1.2 OFF, sensor feed (10.B.4 REFERS TO SENSORS SECTION OF THE DOCUMENT MODELLED FOR THIS SECTION) and live 20.1.6.1.3 GPS COORDINATES.

Figure 21 is an example of a "Helicopter" /" Airplane". When user clicks on holograms of 21.1.1 HOLOGRAMIC IMAGE OF HELICOPTER (ASSET) or 21.1.2 HOLOGRAMIC IMAGE OF AIRPLANE (ASSET) it opens a big holographic screen 21.1.2.1 HOLOGRAMIC IMAGE OF SELECTED ASSET and all screens open like FIGURE 10B IN DOCUMENT MODELLED TO SHOW THE SELECTED ASSET IN THIS SECTION.

Figure 22 Figure 21 is an example of a "Drone" /" Unmanned Aerial Vehicle". When user clicks on holograms of 22.1.1 REFERS TO UAV/DRONES and it opens further screens related to FIGURE 10B IN THE DOCUMENT MODIFIED FOR THIS SECTION. User can also click on 22.1.1.1 REFERS TO LIDAR and leads to further screens of live 22.1.1.1.1 REFERS TO GPS COORDINATES, 22.1.1.1.2 LIDAR FEED, 22.1.1.3 AI ANALYTICS which opens to further screens of 22.1.1.3.1 AI BASED ANALYTICS and 22.1.1.1.4 MAP AREA COVERED BY LIDAR. User can also click on 22.1.1.2 SAME AS LIDAR ABOVE BUT FOR SONAR to open further screens.

Figure 23 depicts A SAMPLE OF GENESIS AI SELECTION. USER SELECTS "ARMY AI" BUTTON IN THIS CASE. This opens AR-MR Screen. 23.1 ALL ASSETS OF ARMY ARE LISTED. User can click on 23.1.1 BUTTONS TO CLICK ON VARIOUS FOR GOING INTO DETAILED AI BASED ANALYTICS. All other Selection boxes under GENESIS AI will also be made like figure 23 and 24.

Figure 24 is an example of GENESIS AI screen for a Single "Digital Asset", which is a soldier in this case. The AR-MR hologram screen opens with options of 24.1 REFERS TO DESCRIPTIVE AI & ANAYTICS OPERATIONS, 24.2 PREDICTIVE AI ANALYTICS & OPERATIONS and 24.3 PRESCRIPTIVE AI ANALTYICS & OPERATIONS. The screen of 24.1 REFERS TO DESCRIPTIVE AI & ANAYTICS OPERATIONS further opens to screens of 24.1.1 GIVES DETAILED INFORMATION ON NO. OF SOLDIERS BY AGE, SKILLS, CAPABILTIES ETC AND CAN BE MODIFIED which further opens to 24.1.1.1 OPENS A NEW SCREEN FOR SELECTED PARAMETER. The screen of 24.1 REFERS TO DESCRIPTIVE AI & ANAYTICS OPERATIONS further opens to screens of 24.1.2 DETAILS BY FATALITIES which further opens to screens of 24.1.2.1 OPENS UP SCREEN WITH ANALYTICS. The screen of 24.1 REFERS TO DESCRIPTIVE AI & ANAYTICS OPERATIONS further opens to screens of 24.1.3 CUSTOMISABLE BUTTON FOR REQUIRED PARAMETERS. The screen of 24.1 REFERS TO DESCRIPTIVE AI & ANAYTICS OPERATIONS further opens to screens of 24.1.4 MISSILE LAUNCH COVERAGE which opens to further screens. The screen of 24.2 PREDICTIVE AI ANALYTICS & OPERATIONS further opens to screens of 24.2.1 BUTTONS FOR FATALITY PREDICTION, SOLDIER DISCHARGE PREDICTION ETC. which opens to further screens of 24.2.1.1 OPENS UP NEW SCREEN FOR SELECTED OPTION. The screen of 24.2 PREDICTIVE AI ANALYTICS & OPERATIONS further opens to screens of 24.2.2 CUSTOMISABLE BUTTON FOR VARIOUS REQUIRED PARAMETERS. The screen of 24.2 PREDICTIVE AI ANALYTICS & OPERATIONS further opens to screens of 24.2.3 NUCLEAR LAUNCH PREDICTION, 24.2.4 LIVE WAR SCENARIO PREDICTIONS which further opens to screens of 24.2.4.1 OPENS SCREENS FOR SELECTION. The screen of 24.3 PRESCRIPTIVE AI ANALTYICS & OPERATIONS further opens to screens of 24.3.1 BUTTONS FOR INFILTRATE PRESCRIPTIVE, WAR SCENARIO PRESCRIPTIVE ETC. and 24.3.1.1 OPENS SCREEN FOR SELECTION. The screen of 24.3 PRESCRIPTIVE AI ANALTYICS & OPERATIONS further opens to screens of 24.3.2 BUTTONS FOR ALL POSSIBLE REQUIRED PARAMETERS, 24.3.3 MISSILE TARGET ALLOCATION. The screen of 24.4 AI COGNITIVE ANALYTICS & OPERATIONS (WARNING: AUTONOMY GIVEN TO AI) further opens to screens of 24.4.1 NUCLEAR LAUNCH (AI CONTROLLED) which further opens to 24.4.1.1 SCREEN OPENS UP. The screen of 24.4 AI COGNITIVE ANALYTICS & OPERATIONS (WARNING: AUTONOMY GIVEN TO AI) further opens to screens of 24.4.2 CUSTOMISABLE BUTTON FOR ALL REQUIRED PARAMETERS.
NOTE: THE GENESIS AI is an ecosystem where Artificial Intelligence (Ai) operates various functions of GENESIS. Every function and parameter of GENESIS has an Ai inbuilt into it with levels of complexity of Ai. Figure 24 has to be made for all Clickable boxes of GENESIS AI.

Figure 25 depicts an example of a "Digital Asset" of a 25.1 HOLOGRAM OF ROCKET/MISSILE. User clicks on the hologram and screens open for 25.1.1 ACTUAL PHOTO, 25.1.2 DETAILS OF THE ROCKET/MISSILE, live 25.1.3 GPS COORDINATES, User can click and see screens of video feeds on Missile/Rocket (8.B.13 TO 8.B.15 REFERS TO VIDEO FEED UNDER FIGURE 8). User clicks, and screens open for 25.1.4 PAYLOAD DETAILS (8.B.20.5 REFERS TO AMMUNITION STOCK SECTION OF FIGURE 8B). User clicks, and screens open for sensor feeds on Missile/Rocket (10.B.4 REFERS TO SENSOR SECTION IN FIGURE 10B). User clicks, and screens open for Radar Feed (13.1 REFERS TO RADAR FEED SECTION IN FIGURE 13. User clicks and can view all manuals of the digital asset (10.B.5 REFERS TO MANUAL SECTION OF FIGURE 10B OF THE DOCUMENT (MODELLED FOR THIS SECTION). User and also click and use target and firing options on Digital Asset (10.B.6 REFERS TO FIGURE 10B (MODELLED FOR THIS SECTION). User can also click to open screens for 10.B.7 REFERS TO MECHANICAL COMPONENTS IN FIGURE 10B OF THIS DOCUMENT (MODELLED FOR THIS SECTION). User can also click 25.1.5 SELF DESTRUCT BUTTON and 25.1.6 MISSILE TRAJACTORY
Figure 26 depicts the 26.1.1 REFERS TO HOLOGRAM OF THE ROBOT in GENESIS. User can click and see video feeds like 26.1.1.1 NIGHT VISION CAMERA, 26.1.1.2 THERMAL VISION CAMERA, 26.1.1.3 NORMAL VIDEO, 26.1.1.4 CAMERA, 26.1.1.5 SPEAKER, 26.1.1.6 STEEL/TITANIUM OR AN ALLOY BULLET PROOF ARMOUR, 26.1.1.7 SENSORS and can also click26.1.18 WHEELS CAN COME OUT AS REQUIRED. Complete Screen 8.A and 8.B also opens. The same must be created for unmanned robotic vehicles.

Figure 27 depicts 27.1.1 REFERS TO HOLOGRAMIC IMAGE OF SWARM ROBOTS (Swarm bots means a group of drones or mini-drones for attack or surveillance or operations, also known as Nano-Bots). User clicks on hologram of swarm bots and for each swarm bot, user can open screens. Screens comprise of 10B REFERS TO IMAGE 10B IN DOCUMENT (MODELLED FOR THIS SECTION LEAVING OUT CREW SECTION), 13.1 REFERS TO RADAR FEED FROM FIGURE 13 OF THE DOCUMENT, 27.1.1.1 REFERS TO SELF DESTRUCT BUTTON with options to click 27.1.1.1.1 NO and 27.1.1.1.2 YES

Figure 28: shows AR-MR platform and its applicability on different modes such as Mobile phones, smart phones, tablets and computers in an encrypted secured environment.

Figure 29 depicts a hologram of a "Goods Vehicle/Truck" in Genesis. When user click on hologram, screens open of FIGURE 10B AND 11 FROM THE DOCUMENT. User can also click and check the issuing and delivery schedule (15.4 REFERS TO ISSUING AND DELIVERY SCHEDULE OF AMMUNITION IN THE DOCUMENT (MODELLED FOR THIS SECTION)). User clicks, and more screens open for 29.1 REFERS TO AUTHORIZATION RECORDS which leads to further screens of 29.1.1 AUTHORIZATION RECORDS OPEN. User clicks, and more screens open for 29.2 REFERS TO ALL CUSTOM RECORDS which leads to more screens of 29.2.1 CUSTOM RECORDS RELATED TO TRUCK and 29.2.1.1 CUSTOM RECORDS SCREEN OPEN UP. User clicks, and screens open for 29.3 CARGO DETAILS which further opens to 29.3.1 CARGO LIST OPENS leading to more screens like 29.3.1.1 CARGO DETAILS and 29.3.1.1.1 CARGO DETAILS. User can also open screens of 29.2.1.1 CUSTOM RECORDS SCREEN OPEN UP, 29.3.2 CARGO LOADING/UNLOADING which opens further screens of 29.3.2.1 LOADING/UNLOADING PERFORMANCE, 29.3.2.1.1 LOADING/TIME METRICS+ AI ANALYTICS, 29.3.2.2 LOADING/UNLOADING SCHEDULES, 29.3.2.2.1 OPENS UP SCREEN

Figure 30 depicts the hologram of a live 30.1 HOLOGRAM OF ROTATING EARTH which the user can access in GENESIS by Clicking on button in GENESIS CENTRAL COMMAND.A 3-D Hologram of Earth appears in AR-MR. The hologram also shows live 30.2 HOLOGRAM OF MISSILE TRAJECTORY and 30.3 MISSILE HOLOGRAM, 30.4 HOLOGRAM LINE SHOWING ORBIT OF THE ORBITING ASSET, 30.5 HOLOGRAM OF ALL ORBITING SPACE WEAPONS, 30.6 HOLOGRAM OF ALL ORBITING SPACE WEAPONS. THE GENESIS CENTRAL COMMAND ALSO HAS AN OPTION TO SHOW ALL ASSETS CONNECTED TO GENESIS in live ON THIS 3D HOLOGRAM.

Figure 31 shows the screens that open upon clicking the hologram of a "Orbiting Digital Asset" around figure 30. 30.6 REFERS TO FIGURE 30 LINKAGE IN THE DOCUMENT. The screens also open into FIGURE 10B AND 11 IN THE DOCUMENT for this asset. User can also view radar feed screens by clicking (13.1 REFERS RADER FEED FROM FIGURE 13 IN THE DOCUMENT). User can also view all assets being tracked by orbiting asset by clicking and opening screens of 13.3 TO LINKED ASSETS FEED FROM FIGURE 13 IN THE DOCUMENT. User can click and open screens for 31.1 HISTORICAL VIDEOS/PHOTOS which opens into further screens 31.1.1 SPACE ASSET LAUNCH RECORDS, 31.1.1.1 VIDEO ARCHIEVS, 31.1.1.2 PHOTO ARCHIVES.

Figure 32 depicts the screens for UAV/Drones same as figure 22.

## Claims

1. A system providing complete global defence mobility, operation and execution of any kind, anywhere, at any place by an authorised user, the system comprising live hologram projections "Digital Assets" of all on field "Physical Assets" ;
each hologram of a physical asset having infinite data points as required;
and the system creating live "Digital Twins" of all available physical assets including humans in real world complete with monitoring, visualisation, communication, operations and execution capabilities incorporating Artificial Intelligence Powered Descriptive, Predictive, Prescriptive and Cognitive (Fully Autonomous) Analytics and operative capabilities for Global Defence World.

2. A system as claimed in claim 1 providing live holographic visualisations of battle fields, conflict zones and every surface area of the earth including air, sea and space.

3. A system as claimed in claim 2 wherein the live holographic visualisation of battle fields and other areas visualisations with Artificial Intelligence Analytics in real time leads to total mission awareness, mission planning, rehearsal and execution- operations.

4. A system as claimed in claim 1 wherein the system itself creates Absolute Situational awareness by providing real-time information on the current situation and execution-operational capabilities.

5. A system as claimed in claim 1 wherein all the functions of the system are "Touch" enabled and "Voice Command" enabled.

6. A method of executing the system as claimed in claim 1 wherein a user starts the system by wearing SMART glass / eye wear with Augmented Reality- Mixed Reality holographic projection capability; post starting the system the user sees hologram in AR-MR box with holographic text in MR-AR and clickable button or voice command activated which brings user to REFERS TO HOLOGRAMIC AR-MR STREAM BOX and also enables the user to see the physical environment around him in AR-MR.

7. A method as claimed in claim 6 wherein REFERS TO HOLOGRAMIC AR-MR SCREEN BOX comprises of REFERS TO GENESIS CENTRAL COMMAND and REFERS TO GENESIS AI-ARTIFICIAL INTELLIGENCE.

8. Optionally a method of executing the system as claimed in claim 1 wherein a user starts the system with Augmented Reality-Mixed Reality holographic projection capability.

9. A system as claimed in claim 1 wherein the "Physical Assets" including Helicopter, airplanes, UAV and Drones are accessible on the click of a button.

10. A system as claimed in claim 1 wherein the "Digital Asset" are accessible on the click of a button.
